# EUROPEAN PATENT APPLICATION

(11) **EP 2 037 685 A1**
(43) Date of publication of application: **18.03.2009**
(21) Application number: 07743271.4
(22) Date of filing: 14.05.2007
(51) Int. Cl.: H04N 7/26, G06T 3/00, H04N 1/387, H04N 1/41, H04N 5/225

(54) **METHOD FOR COMPRESSING IMAGING DATA BY WIDE-ANGLE LENS, COMPRESSION DEVICE, WIDE-ANGLE CAMERA DEVICE, AND MONITOR SYSTEM**

(30) Priority: 29.05.2006 JP 2006147871
(71) Applicant: Opt Corporation, Chino-shi, Nagano 391-0013 (JP)
(72) Inventor: OGAWA, Tatsuro, Chino-shi, Nagano 391-0013 (JP)
(74) Representative: Schäfer, Matthias W.
(86) International application number: PCT/JP2007/059836
(87) International publication number: WO 2007/138845

(57) **Abstract**

The advantage of the invention is to efficiently reduce the amount of image data shot by using a wide -angle lens such as a fish- eye lens. A method of compressing image data shot with a wide -angle lens 9 according to the invention comprises: assigning a plurality of pixel data within a predetermined circular range based on a rectangular shot image including a circular image shot by a wide -angle lens, producing a rectangular reduced image of which numbers of pixels are smaller than the rectangular shot image (step ST4), and compressing the rectangular reduced image (step ST5).

## Description

### [Technical Field]

The present invention relates to a method of compressing image data with a wide -angle lens, a compression device, a wide-angle camera device and a monitoring system.

### [Technology Background]

The patent document 1 discloses an image transmission system coupling a mobile camera phone to a server through a public line. Image data of an image shot by the camera is sent from the camera mobile phone to the server through the public line. The server clips a part of the image of the received image data and sends it to the camera mobile phone. The camera mobile phone displays the received clipped image.

The patent document 2 discloses an image transmission system coupling a plurality of mobile camera phones to a server through a public line. Image data of an image shot (imaged) by one of cameras is sent from the mobile camera phone to a server through a public line. The server clips a part of the image of the received image data and sends it to the other mobile camera phones. Other camera mobile phones display the received clipped image.

The patent document 3 discloses a computational algorism for clipping an image shot with a fish eye lens as one of wide -angle lenses as well as restricting distortion of a part of the image.

[Patent Document 1 ]
   JP-A-2003-283819(Fig.1, Fig.3 and preferred embodiments)
[Patent Document 2 ]
   JP-A-2003-284019(Fig.1, Fig.4 and preferred embodiments)
[Patent Document 3 ]
   JP-A-2005-339313(Abstract, Fig.1, Fig.4, Fig.6, Fig.9 and preferred embodiments)

### [Disclosure of the Invention]

### [Problem to Be Solved]

Using technologies disclosed in the patent documents 1 and 2, enables a camera device or a system to clip an part of an image shot by a wide -angle lens such as a fish eye lens as well as restricting the distortion of the part of the image, transmit the clipped image and displays it. Further, using technology disclosed in the patent document 3 enables a camera device or a system to restrict the distortion of the clipped image.

In recent years, imaging devices including large amount of pixels such as two millions or three millions is beginning to be distributed into the market with cheap prices. These devices generate image brightness distribution data by photo- electric conversion. Further, a device including ultra large numbers of pixels such as five millions is also beginning to be distributed into the market.

Further, the image obtained with a wide -angle lens such as a fish eye lens is converted into the image brightness distribution data by using an imaging device having ultra high pixel numbers. This conversion achieves practical and high resolution such as a Video Graphics Array (VGA) size including 640 x480 pixels or an extended Graphics Array (XGA) size including 1024x768 pixels.

A device using a wide -angle lens such as a fish eye lens is mainly applied to a monitoring device. Using a monitoring device enables a viewer to browses a shot image in real- time and/or saves it. Further, a viewer replays the saved image later with a monitoring device and reviews it.

When the saved image is replayed later, there is a case where a viewer would like to browse a field which is different from the field which was viewed in real-time. And, when the saved image is replayed later, a viewer may wish to switch a range to be replayed. But, a monitoring device using a normal lens images only a field which a viewer browses in real-time , but does not image other fields out of such field. Hence, it is impossible for a monitoring device using a normal lens to respond a request from a viewer who would like to switch a field to be browsed when he/she replays it later. On the other hand, a monitoring device using wide -angle lens such as a fish eye lens images a field including a wide range and may image the range which is out of a clipped range. Namely, a monitoring device using wide -angle lens is capable of switching an image and replaying it by accumulating brightness distribution data shot with a imaging device and shot image data based on the brightness distribution data.

Meanwhile, in order to obtain a practical and high resolution image which is clipped, an imaging device including large numbers of pixels is needed as described above. However, the amount of brightness distribution data generated by a high -numbered -pixels imaging device and shot image data based on it are huge. Accordingly, as the result of it, there is a problem in that the amount of data to be accumulated and transmitted by a monitoring device, which is capable of clipping of a shot image and replaying it, becomes extremely large.

The advantage of the present invention is to provide a method of compressing image data shot with a wide -angle lens such as a fish eye lens, a compression device, a wide-angle camera device and a monitoring system, which are capable of reducing the amount of image data shot with a wide -angle lens such as a fish eye lens more efficiently.

### [Means to Solve the Problem]

According to a first aspect of the invention, a method of compressing image data shot (imaged) by a wide -angle lens comprises:
assigning a plurality of pixel data within a predetermined circular range based on a rectangular image including a circular image shot with a wide -angle lens, and producing a rectangular reduced image of which pixel numbers are smaller than that of the rectangular shot image, and compressing the rectangular reduced image.

In this aspect of the invention, the rectangular image shot with a wide -angle lens is converted into the reduced image of which numbers of pixels are smaller than that of the rectangular image and compressed. Hence, the amount of data after compressed can be reduced compared to a case where a shot image itself is compressed.

Further, in this method, pixel data within a predetermined circular range, which is a shot rectangular image, is assigned to a reduced image. Accordingly, the amount of information regarding a plurality of pixel data in the circular image can be hold as being equal to that of a case where the shot image itself is directly compressed. Namely, the amount of image data shot by using the wide -angle lens can be efficiently reduced.

According to a second aspect of the invention, a device that compresses image data shot with a wide -angle lens comprises:an conversion unit that assigns a plurality of pixel data within a predetermined circular range based on a rectangular shot image including a circular image shot with a wide -angle lens, and produces a rectangular reduced image of which pixel numbers are smaller than that of the rectangular shot image, and a compressing unit that compresses the rectangular reduced image.

In the second aspect of the invention, the information amount regarding a plurality of pixel data in the circular image can be hold as being equal to the information amount in a case where the shot image itself is directly compressed. The amount of compressed image data can be efficiently reduced compared to the case when the shot image itself is compressed. Namely, the amount of image data shot by using the wide -angle lens can be efficiently reduced.

In addition to the second aspect of the invention, the conversion unit may assigns a plurality of pixel data within the predetermined circular range of the shot image, based on every pixel unit or every block unit including a plurality of pixels, to a rectangular reduced image.

In this additional aspect of the invention, a plurality of pixel data within the predetermined circular range of the shot image may be assigned, based on every pixel unit or every block unit including a plurality of pixels, to a rectangular reduced image.

In addition to the second aspect of the invention, the conversion unit may assign a plurality of pixel data within the predetermined circular range of the shot image to a rectangular reduced image every a plurality of block units which have different pixel numbers each other so that the pixel numbers in the block of the central area of the circular range are larger than the numbers of pixels in the block of the circumferential area of the circular range.

In this additional aspect of the invention, the image in the circumferential area of the circular range can be segmentalized as blocks including small numbers of pixels. The circular image shot with a wider angle lens generally shows that the image in the circumferential area is largely deformed and the resolution of it is low. Hence, the additional aspect of the invention may has a configuration in that the image in the circumferential area of the circular range can be segmentalized as blocks including small numbers of pixels compared to the central area. This configuration can avoid the reduction of the amount of information about the image in the circumferential area which has large deformation and the low resolution, and further reduce the total amount of information as the whole image.

In addition to the second aspect of the invention, the conversion unit may make pixel data , which has not been assigned to the pixel data in the shot image data, be a predetermined uniform color in the rectangular reduced image. The compression unit may separate the reduced image into constant (DC) component and an oscillatory (AC ) component by block coding and code them or code them by run length coding based on a pixel alignment.

In this additional aspect of the invention, with respect to the reduced image, the amount of compressed data of the pixel data not assigned to the pixel data in the shot image data can be reduced compared to a case when the pixel data is made to be a predetermined uniform color. As the result, even when the pixel numbers of the reduced image is larger than the pixel numbers within the predetermined range of the shot image, such pixel numbers can be made to be equal to the data amount in a case when it is almost the same of the pixel numbers within the predetermined range of the shot image

According to a third aspect of the invention, a wide angle camera device comprises: a wide -angle lens; an imaging unit that forms a circular image based on light concentrated by the wide -angle lens and images an rectangular image including the circular image; an conversion unit that assigns a plurality of pixel data within a predetermined circular range based on the rectangular shot image including the circular image shot by the imaging unit, and produces a rectangular reduced image of which numbers of pixels are smaller than that of the rectangular shot image, and a compressing unit that compresses the rectangular reduced image.

In the third aspect of the invention, the amount of information regarding a plurality of pixel data in the circular image of the shot image can be hold as being equal to that of a case where the shot image itself is directly compressed. Further, the amount of compressed image data can be efficiently reduced compared to a case when the shot image itself is compressed. Namely, the amount of image data shot by using the wide -angle lens can be efficiently reduced.

According to a fourth aspect of the invention, a wide angle camera device comprises: a wide -angle lens; an imaging unit that forms a circular image based on light concentrated by the wide -angle lens, assigns a plurality of pixel data within a predetermined circular range based on a rectangular shot image including the circular image, and produces a rectangular reduced image of which pixels numbers are smaller than that of the rectangular shot image; and a compressing unit that compresses the rectangular reduced image.

In the fourth aspect of the invention, the imaging unit assigns a plurality of pixel data within a predetermined circular range, and produces a rectangular reduced image of which pixels numbers are smaller than that of the rectangular shot image. As the result, the amount of information regarding a plurality of pixel data in the circular image can be hold as being equal to that of a case where the shot image itself is directly compressed. Further, the amount of compressed image data can be efficiently reduced compared to a case when the shot image itself is compressed. Namely, the amount of image data shot by using the wide -angle lens can be efficiently reduced.

In addition to the third or fourth aspect of the invention, the imaging unit may include at least three million pixels and more. A wide angle camera device may further comprise: a saving unit that saves the image data compressed by the compressed unit; an expanding unit that expands the compressed image saved by the saving unit; and a display image producing unit that clips a part of the image expanded by the expanding unit and expands the clipped part to at least the VGA size or more for producing it as a clipped image.

In this additional aspect of the invention, the amount of image data shot by using the wide -angle lens can be efficiently reduced and the amount of memory capacity in the memory can also be reduced. Further, the image saved by the saving unit can be expanded after the image is shot, a desired part of the image can be clipped and he clipped part can be expanded to at least the VGA size or more as an image to be displayed with a more practical high resolution.

According to fifth aspect of the invention, a monitoring system comprises a wide angel camera device and a browsing unit. The wide angle camera device includes: a wide -angle lens; an imaging unit that forms a circular image based on light concentrated by the wide -angle lens, assigns a plurality of pixel data within a predetermined circular range based on a rectangular shot image including the circular image, and produces a rectangular reduced image of which pixels numbers are smaller than that of the rectangular shot image; and the imaging unit having at least three million pixels or more; a compressing unit that compresses the rectangular reduced image; a saving unit that saves the image data compressed by the compressed unit; an expanding unit that expands the compressed image saved by the saving unit; and a display image producing unit that clips a part of the image expanded by the expanding unit and expands the clipped part to at least the VGA size or more for producing a clipped image. The browsing unit includes a displaying unit that receives the clipped image which is expanded or the clipped image before the clipped image is expanded by communication from the wide angle camera device and displays the received image to be displayed.

In the fifth aspect of the invention, a desired part of the image shot by the wide angle camera device can be clipped after the image is shot and the clipped part can be expanded to at least the VGA size or more as a clipped image with a more practical high resolution.

According to sixth aspect of the invention, a monitoring system comprises: a wide -angle lens; a wide -angle lens camera device that generates a rectangular shot image including a circular image shot by the wide -angle lens: a browsing unit that includes a display unit displaying the rectangular shot image generated by the wide -angle lens camera device or a part of the rectangular shot image. The system further comprises : an conversion unit that assigns a plurality of pixel data within a predetermined circular range based on the rectangular shot image including the shot circular image and produces a rectangular reduced image of which pixel numbers are smaller than that of the rectangular shot image, and a compressing unit that compresses the rectangular reduced image; a transmission unit that transmits the image compressed by a compressing unit and/or saved by a saving unit from the wide -angle lens camera device to the browsing unit an expanding unit that expands the image compressed image saved by the memory or the compressed image transmitted by the transmitting unit; and a displaying image producing unit that clips a part of the image expanded by the expanding unit or expanded or shrunk and expands the clipped part for producing a image to be displayed by a displaying unit.

In the sixth aspect of the invention, the image saved by the saving unit or transmitted by the transmitting unit becomes an image that is converted into a reduced image having less pixel numbers compared to that of the rectangular image shot by the wide -angle lens and compressed. Hence, the amount of data regarding the image saved by the saving unit or transmitted by the transmitting unit can be reduced compared to that of the compression of the shot image itself. Further, in this configuration, a plurality of pixel data within a predetermined circular range, which is a rectangular shot image, are assigned to a reduced image. Accordingly, the amount of information regarding a plurality of pixel data in the circular image can be hold as being equal to that of a case where the shot image itself is directly compressed.

### [Advantage of the Invention]

According to aspects of the invention, the amount of image data shot by using a wide -angle lens such as a fish- eye lens can be efficiently reduced.

### [Brief Description of Drawings]

[Fig1.] Fig.1 is a oblique perspective view showing an ultra- small wide -angle camera device regarding a first embodiment of the invention.
[Fig.2] Fig.2 is a block diagram showing a imaging function embedded in the ultra- small wide -angle camera device in Fig.1.
[Fig.3] Fig.3 is a diagram illustrating the optics of the ultra- small wide -angle camera. [Fig4] Fig.4 is schematic diagram showing a state of aligning a plurality of light receiving elements at a light receiving surface in Fig.3.
[Fig.5] Fig.5 is a illustrative diagram showing an example of an image formed on the light receiving surface of a CMOS imaging device.
[Fig.6] Fig.6 is a block diagram showing a hardware structure of ASIC in Fig.2.
[Fig.7] Fig.7 is an illustrative diagram showing an example of a conversion rule for pixel arrangements based on a conversion rule data in Fig.6.
[Fig.8] Fig.8 is a flow chart showing the operation of imaging an image with the ultra-small wide -angle camera device in Fig.1.
[Fig.9] Fig.9 is a flow chart showing the operation of reproducing an image with the monitor system in Fig.2.
[Fig.10] Fig.10 is an illustrative diagram showing examples of display instruction commands produced by the PC displaying controller in Fig.2 based on the input data. [Fig.11] Figs.11 (A) to (C) are diagrams showing examples of display combinations displayed by a large sized LCD of the personal computer in Fig.2.
[Fig.12] Fig.12 is a flow chart showing the operation of producing a display still image to be displayed by the ultra- small wide -angle camera device.
[Fig.13] Figs.13 (A) to (D) are illustrative diagrams showing pixel conversion rules in the embodiment 1 and its modification.
[Fig.14] Fig.14 is an illustrative diagram showing pixel conversion rules in the further modification of the embodiment 1.
[Fig. 15] Fig.15 is a block diagram showing a functional configuration of a monitor system in a second embodiment of the invention.
[Fig. 16] Fig.16 is a diagram showing the relationship between the alignment of a plurality of light receiving elements and its address regarding the CMOS imaging device in Fig.15.
[Fig. 17] Fig.17 is an illustrative diagram showing pixel alignments regarding brilliance image data generated by the CMOS imaging device in Fig.15.
[Fig. 18] Fig.18 is a block diagram showing a functional configuration of a monitor system in a third embodiment of the invention.

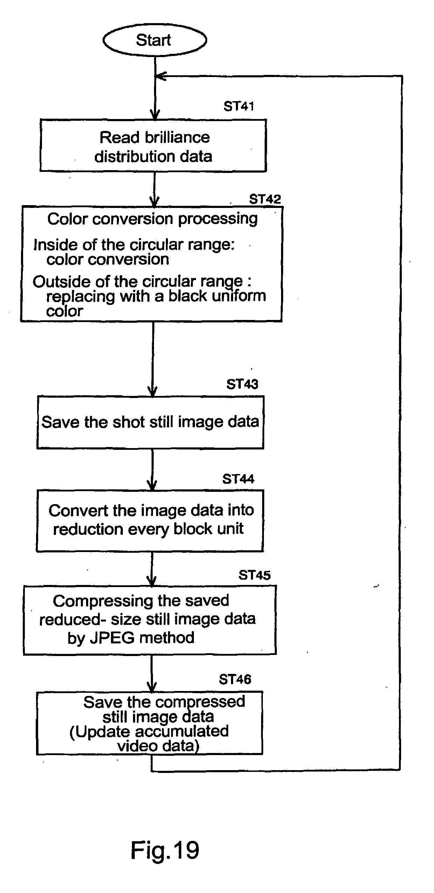

[Fig.19] Fig.19 is a flow chart showing the operation of imaging an image with the ultra-small wide -angle camera device in Fig.18.
[Fig.20] Figs. 20(A) to (C) are diagrams showing image configurations at each of image conversion stages from imaging an image to compressing the image by the ultra- small wide -angle camera device
[Fig.21] Fig. 21 is an illustrative diagram showing a case example in which a plurality of blocks including a circular image are clipped from the shot still image 84 based on a plurality of blocks which have different numbers of pixels.

### [Reference Numerals]

- 1:: ultra- small wide -angle camera device (wide- angle camera device)
- 9:: fish eye lens (wide -angle lens),
- 11:: USB cable (a part of a transmission unit)
- 12:: personal computer ( browsing device)
- 13:: monitoring system
- 21, 71:: CMOS imaging device (imaging unit)
- 26:: HDD (saving unit)
- 34,73, 83:: image conversion unit (conversion unit)
- 32:: display image generation unit (display image generation unit)
- 36:: JPEG engine (compressing unit and expanding unit)
- 37:: device communication unit (a part of transmission unit)
- 43:: LCD (displaying unit)
- 46:: host communication unit (a part of transmission unit)

### [The preferred embodiments of the invention]

Exemplarily embodiments of a method of compressing image data with wide -angle lens, a compression device, a wide-angle camera device and a monitoring system regarding the invention will be explained by referring to figures. The wide-angle camera device will be explained as an example of ultra- small wide -angle camera device that is a part of monitoring system. The compression device will be explained as a part of the ultra-small wide -angle camera device. The compression method will be explained as a part of the operation of the ultra- small wide -angle camera device.

### [Embodiment 1]

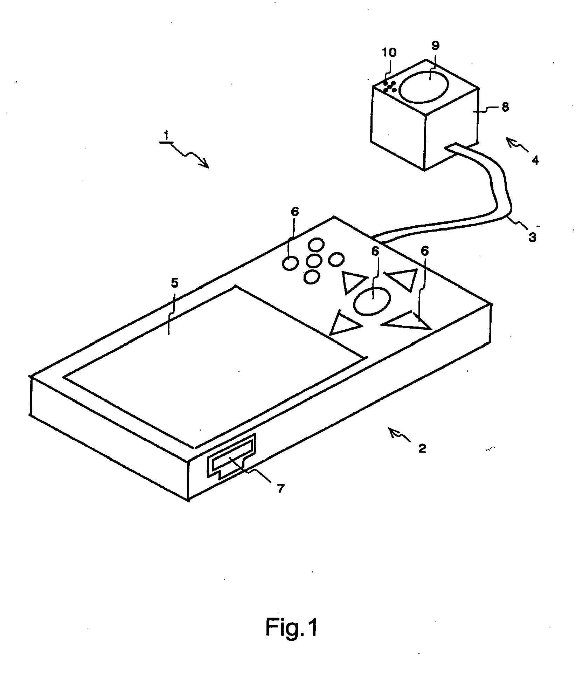

Fig.1 is a oblique perspective view showing an ultra- small wide -angle camera device 1 regarding a first embodiment of the invention.

The ultra- small wide -angle camera device 1 comprises a body unit 2 and a camera unit 4 coupled with it through a signal wire 3. A person can pocket the ultra- small wide -angle camera device 1 and casually carry it. Here, the camera unit 4 may be coupled to the body unit 2 by wireless communication as a wireless transmission route, or embedded into the body unit 2 as a part of it.

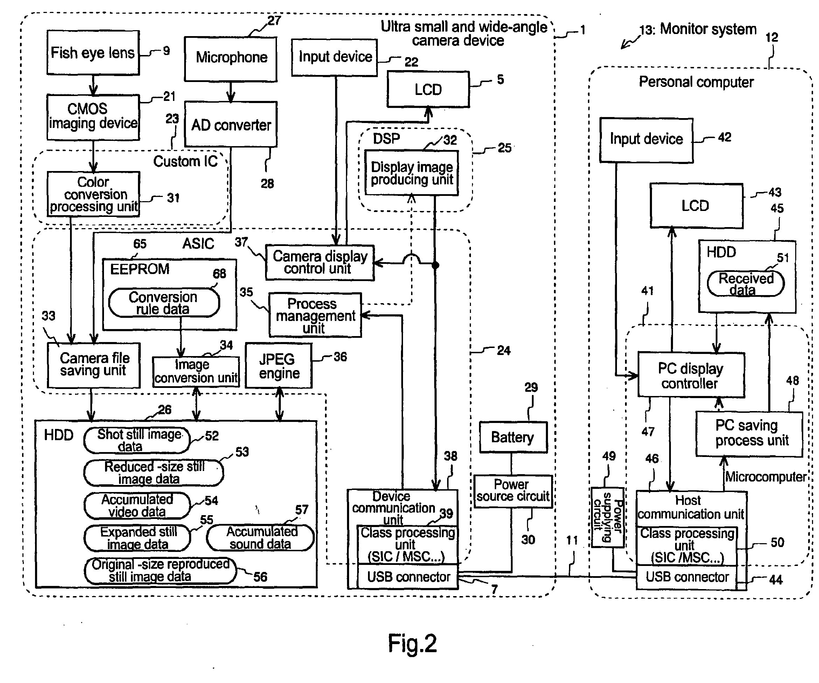

The body unit 2 shows a board shape having a approximate rectangle which is almost the same size of a portable music player. The portable music player includes a hard disk drive (HDD) or a semi conductor memory which records content data. The body unit 2 is provided with a liquid crystal device (LCD) 5, a plurality of operational keys 6 in an input device 22 (refer to Fig.2) and a universal serial connector (USB) connector 7, which are installed as exposed. The LCD 5 and the plurality of operational keys 6 are installed as being arranged together on the upper surface of the body unit 2 in Fig.1, which is an upper side of Fig.1. Further, the USB connector 7 is installed on the side of the body which is a right low side of Fig.1. A USB cable as a communication route can be couple to the USB connector 7. The USB cable includes a wire for a power source and a wire for signal transmission. As the USB connector 7, a mini B type which is small may be favorable for example.

The camera unit 4 includes a housing 8 which has an approximate cubic shape. The camera unit 4 is provided with a fish eye lens 9 as a wider angle lens which is installed as being exposed on the upper surface of it, the upper side of Fig.1. A ventilation hole 10 for a microphone 27 is opened at a place adjacent to the exposed position of the fish eye lens 9. The fish eye lens 9 has a shape which includes the less amount of projection compared to a normal fish eye lens, and includes a further plainer surface opposing to a subject to be imaged.

Fig.2 is a block diagram showing an imaging function embedded in the ultra- small wide -angle camera device in Fig.1. Fig.2 illustrates not only the ultra- small wide -angle camera device 1, but a personal computer 12 as a browsing device , which is coupled to the ultra- small wide -angle camera device 1 through the USB cable 11. A monitoring system 13 comprises the ultra- small wide -angle camera device 1 and the personal computer 12.

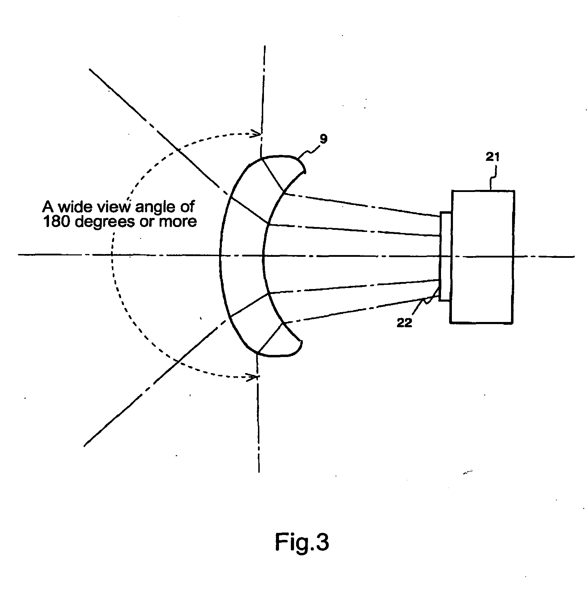

Fig.3 is a diagram illustrating the optics of the ultra- small wide -angle camera device 1. The ultra- small wide -angle camera device 1 includes a complementary metal oxide semiconductor (CMOS) imaging device 21. The CMOS imaging device 21 includes a light receiving surface 22 of which the aspect ratio is 4:3 (horizontal: longitudinal.) Here, the aspect ratio as horizontal and longitudinal directions of the light receiving surface 22 may be 16:9. A plurality of light receiving elements not shown in the figure are horizontally and longitudinally installed on the light receiving surface 22 of the CMOS imaging device 21. A plurality of light receiving elements corresponding to three million pixels are installed on the light receiving surface 22 for example.

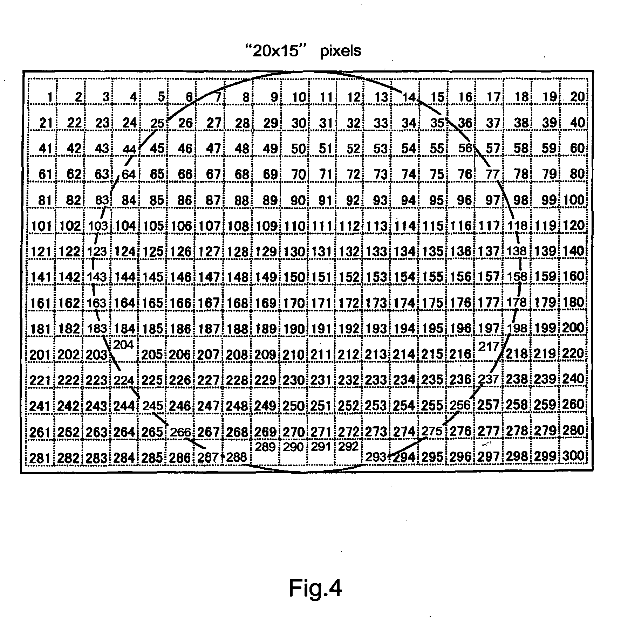

Fig.4 is schematic diagram showing a state of aligning a plurality of light receiving elements on the light receiving surface 22 in Fig.3. In Fig.4, a grid illustrated as a dot line is an arrangement of a plurality of light receiving elements. Numbers described in each grid is an address value which is used for reading an amount of light received by a light receiving element. Fig.4 shows three hundreds light receiving elements which are arranged as twenty columns in the longitudinal direction and fifteen rows in the horizontal direction on the light receiving surface 22.

As shown in Fig.3, the fish eye lens 9 is installed toward the approximate vertical direction against the light receiving surface 22 in the CMOS imaging device 21. The fish eye lens 9 has a wide viewing angle which is 180 degrees or more (approximately 200 degrees.) An image produced by concentrating light with the fish eye lens 9 is formed on the light receiving surface 22 of the CMOS imaging device 21.

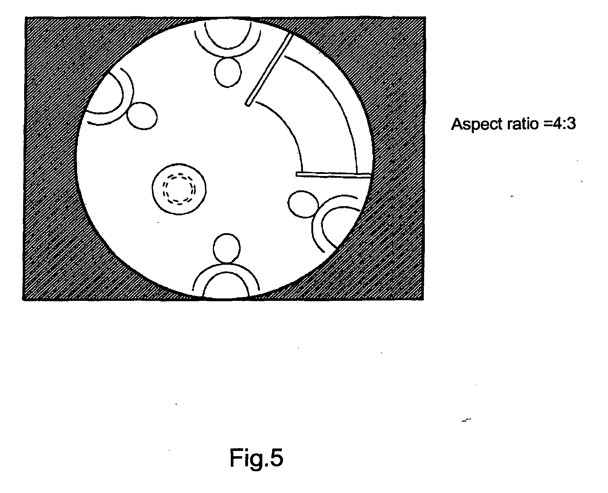

Fig.5 is an illustrative diagram showing an example of an image formed on the light receiving surface 22 of the CMOS imaging device 21. As shown in Fig.5, a light of subject concentrated by the fish eye lens 9 is projected to the center of the light receiving surface 22. A circular image showing a circular outline is formed by this light on the center of the light receiving surface 22. The circular image is an image as a light of subject passed through the fish eye lens 9, which has tendency of increasing image deformation along with the outer circumference of the image. Here, in the outskirts which is outside of the circular image on the light receiving surface 22 (a part marked as oblique lines in Fig.5), a small graded effect is given due to light leaked from the camera unit 4 or light run around by diffraction. The amount of light received in the circumferential area does not become a uniform black value.

The CMOS imaging device 21 reads the amount of light irradiated onto a plurality of light receiving elements which are arranged on the light receiving surface 22 and generates the brilliance image data of the rectangular image which has the same aspect ratio of the light receiving surface 22. The brilliance image data generated by the CMOS imaging device 21 includes pixel data which are equal to numbers of light receiving elements arranged on the light receiving surface 22 for example. The brilliance image data includes three hundred pixel data in Fig.4 for example. The circle in Fig.4 corresponds to the outline of the circular image. Pixel data in the outline includes brilliant information of the circular image. Pixel data out of the outline includes brilliant information of leaked light and the like.

Here, a charge coupled device (CCD) may be used instead of the CMOS imaging device 21. The CMOS imaging device 21 can read the amount of light irradiated onto a plurality of light receiving elements which are arranged on the light receiving surface 22 every one column or row. The CMOS imaging device 21 can read the amount of light irradiated onto a plurality of light receiving elements from the pixel number 1 to 20 in Fig.4 once by designating the address line for example. On the other hand, CCD reads the amount of light by designating an address every one light receiving element. This reading with CCD tends to take much time for producing brilliance image data, compared to that of the CMOS imaging device 21.

The ultra- small wide -angle camera device 1 comprises the LCD 5, the input device 22 having a plurality of operating keys 6, the USB connector 7, the fish eye lens 9, the CMOS imaging device 21, a custom integrated circuit (IC) 23, an application specific IC (ASIC) 24 , a digital signal processor (DSP) 25, HDD26 as a saving unit for memorizing data, the microphone 27, an AD converter 28, a battery 29 and a power source circuit 30. Of these components in the circuit configuration, for example, the fish eye lens 9, the CMOS imaging device 21, a custom integrated circuit (IC) 23, and the microphone 27 may be installed into the camera unit 4 and other components may be installed into the body unit 2.

The microphone 27 picks up sounds around the ultra- small wide -angle camera device 1. The microphone 27 generates a sound signal such as a voice. The waveform of the sound signal changes depending on the sound picked up by the microphone 27. The AD converter 28 samples the sound signal and generates sound data such as a voice.

The buttery 29 accumulates an electric power. The power source circuit 30 supplies the electric power from the battery 29 or the wire for a power source in the USB cable 11 to each of constituents of the ultra- small wide -angle camera device 1 by DC voltage.

The custom IC 23 is one of microcomputers and comprises an input and output (I/O) port, a timer, a central processing unit (CPU), a random access memory (RAM), an electrically erasable and programmable read only memory (EEPROM) and a system bus coupling these components. Those are not shown in the figure.

The I/O port of the custom IC 23 is coupled to the CMOS imaging device 21 and the ASIC 24. The I/O port supplies data received from the system bus to the CMOS imaging device 21 and the ASIC 24 and also supplies data received from the CMOS imaging device 21 and the ASIC 24 to CPU through the system bus.

The timer in the custom IC 23 measures time. Time measured by the timer includes absolute time such as time of day and an elapsed time period from predetermined timing.

EEPROM in the custom IC 23 saves data. The data saved by the custom IC 23 includes a color conversion processing program not shown in the figure, and data processed in the color conversion for example. The data processed in the color conversion includes a color conversion table for example.

The color conversion table includes data used for producing the shot still image data 52 from the brilliance image data formed by the CMOS imaging device 21. For example, in the color conversion table, a value of amount of receiving light is corresponded to a value of a color.

CPU in the custom IC 23 reads the color conversion processing program saved by EEPROM into RAM and executes the program. This execution realizes a color conversion processing unit 31 shown in Fig.2 as a conversion means and a shot image producing means in the custom IC 23.

The color conversion processing unit 31 produces the shot still image data 52 from the brilliance image data. The color conversion processing unit 31 produces the shot still image data 52 based on the color conversion table saved by EEPROM.

The DSP 25 is one of microcomputers and comprises an I/O port, a timer, CPU, RAM), and a system bus coupling these components not shown in the figure. The I/O port of the DSP 25 is coupled to ASIC 24 or the like. CPU in the DSP 25 reads the display image producing program not shown in the figure saved by EEPROM into RAM and executes the program. This execution realizes a display image producing unit 32 as a display image producing means shown in Fig.2 in the DSP 25.

Still image data is supplied to the display image producing unit 32 from the ASIC 24. The display image producing unit 32 produces display still image data to be displayed in a predetermined display device from the supplied still image data. The display image producing unit 32 produces still image data having the predetermined resolution of a display device from the supplied still image data including various pixel numbers for example. The display image producing unit 32 may produce still image data to be displayed by a part of a predetermined display device from the supplied still image data including various pixel numbers for example.

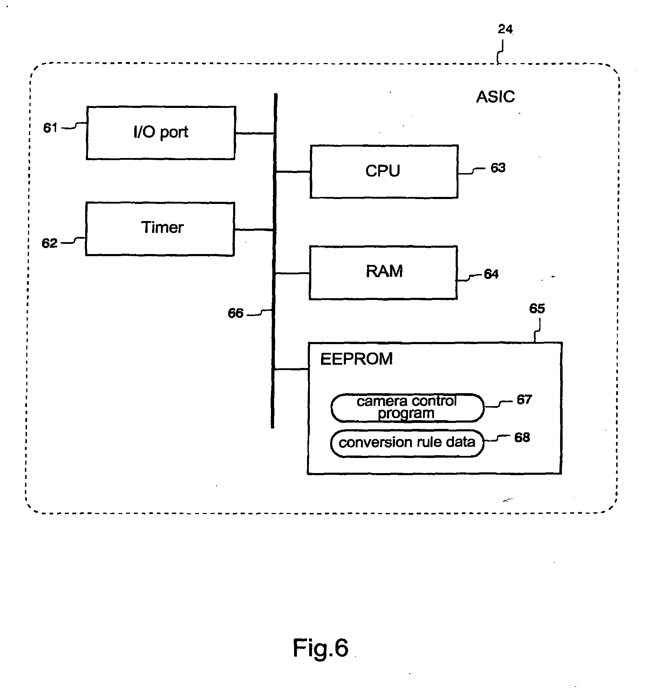

Fig.6 is a block diagram showing a hardware structure of ASIC 24 in Fig.2. The ASIC 24 is one of microcomputers and comprises an I/O port 61, a timer 62, CPU 63, RAM 64,EEPROM 65 and a system bus 66 coupling these components.

The I/O port 61 of the ASIC 24 is coupled to the custom IC 23, the DSP 25, the input device 22, the LCD 5, the AD converter 28, the HDD 26 and the USB connector 7. The EEPROM 65 of the ASIC 24 stores a camera control program 67 and data for executing the program. As the data for executing the program, the conversion rule data 68 is cited for example.

The conversion rule data 68 includes data for converting pixel arrangements to produce rectangular image data (called as reduced size still image data 53 hereafter) of which pixel numbers are less than that of the shot still image data 52 from such image data.

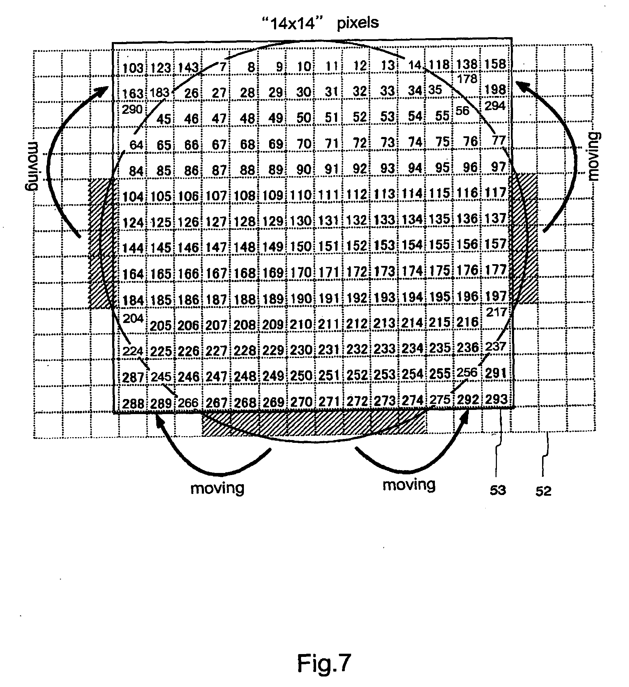

Fig.7 is an illustrative diagram showing an example of a conversion rule for pixel arrangements based on the conversion rule data 68 in Fig.6. In Fig.7, dot line grids show pixel arrangements of the shot still image data 52. The shot still image data 52 includes a plurality of pixels which corresponds to each row or column of a plurality of light receiving elements of the CMOS imaging device 21 shown in Fig.4. In Fig.7, the solid line rectangular frame is a frame for the image of the reduced size still image data 53. In Fig.7, the solid line circle is a frame for the circular image of the shot still image data 52. A part of pixels in the circular image shown as an oblique line hatching in Fig.7, are projected to left and right and/or lower portions from the image frame of the reduced size still image data 53 as shown in Fig.7.

The conversion rule for pixel arrangements in Fig.7 is that the image of the shot still image data 52 including "20x15" pixels is converted into the image of the reduced size still image data 53 including "14x14" pixels. The conversion rule for pixel arrangements in Fig.7 is that the pixels in the circular image are converted into the alignment of "14x14" pixels, in more particular and that pixels projected toward left and right and/or lower portions in Fig.7 are moved to four corner portions of the image of the reduced size still image data 53.

The CPU 63 reads the camera control program saved in the EEPROM 65 into the RAM 64 and execute it. This execution realizes a camera file saving unit 33, an image conversion unit 34, a processing management unit 35, a joint photographic experts group (JPEG) engine 36 as a compressing unit and an expanding unit, a camera display control unit 37, and device communication unit 38 as show in Fig.2 in the ASIC 24.

The camera file saving unit 33 stores the shot still image data 52, supplied from the custom IC 23 to the ASIC 24, into the HDD 26.

The image conversion unit 34 produces the reduced size still image data 53 from the shot still image data 52 saved in the HDD 26 on the basis of the conversion rule data 68 saved in the EEPROM 65. The image conversion unit 34 also produces the original -size reproduced still image data 56 from the expanded still image data 55 saved in the HDD 26 in accordance with the conversion rule data 68 saved in the EEPROM 65.

The JPEG engine 36 compresses the reduced size still image 53 with the JPEG method and produces the compressed still image data. According to the JPEG method, first, discrete -cosine transformation (DCT) and quantization are executed to an image to be compressed every predetermined pixel numbers (8x8 pixels for example) as a block unit, so that a spatial frequency component is obtained as a block unit of the image. The spatial frequency component as a block unit of an image comprises a constant (DC) component as a block unit and a plurality of oscillatory (AC) components as a block unit. Next, entropy encoding is executed to the image every frequency component so as to reduce the volume of image data in the JPEG method. In the entropy encoding, the DC component of an image is encoded by predictive coding such as Huffman coding and the AC component of an image is encoded by run length coding such as arithmetic coding.

The JPEG engine 36 can expand data by executing reverse sequence of the above compression processing. The JPEG engine 36 can obtain the expanded still data 55 from the image data (the compressed still image data) compressed with the JPEG method by executing reverse sequence of the above compression processing. The expanded still image data 55 includes the same pixel alignment of the reduced size still image data 53 and approximately the same image quality of it.

The camera display control unit 37 supplies the display still image data produced by the display image producing unit 32 to the LCD 5. This supplying causes the LCD 5 to display an image based on the display still image data.

The device communication unit 38 executes data communication based on the USB regulation by using the USB connector 7. The device communication unit 38 executes data communication with the host communication unit (the host communication unit 46 in the personal computer 12 as shown in Fig.2.) The device communication unit 38 includes a class processing unit 39 such as a still image class (SIC) and a mass storage class (MSC). The class processing unit 39 includes various communication buffers such as end points corresponding to classes. If communication data is recorded to the communication buffer by the device communication unit 38, the class processing unit 39 transmits the communication data to the host communication unit 46. Further, if the class processing unit 39 receives communication data from the host communication unit 46, it stores the received communication data to the communication buffer and informs the device communication unit 38 of it.

The process management unit 35 manages the operation of the ultra- small wide -angle camera device 1. More specifically, the process management unit 35 , for example, manages the camera file saving unit 33, the image conversion unit 34, the JPEG engine 36, the device communication unit 38,and the camera display control unit 37 which are realized by the ASIC 24 and the display image producing unit 32 realized by the DSP 25.

The personal computer 12 constituting the monitor system 13 in Fig.2 includes the micro computer 41. The micro computer 41 comprises an I/O port, a timer, CPU, RAM and a system bus coupling these components which are not shown in the figure. The I/O port of the micro computer 41 is coupled to an input device 42 such as a key board and a pointing device, a large size LCD 43 as a displaying unit, a USB connector 44 and HDD 45. CPU in the micro computer 41 reads the client program not shown in the figure saved by EEPROM into RAM and executes the program. This execution realizes the host communication unit 46, a PC display controller 47 and a PC saving process unit 48 in the microcomputer 41. Further, a wring for a power source in the USB connector 44 is coupled to the power supplying circuit 49.

The host communication unit 46 communicates data with the device communication unit 38 through the USB connector 44. The host communication unit 46 includes a class processing unit 50 such as SIC and MSC.

The PC saving process unit 48 saves various communication data such as display still image data received by the host communication unit 46 to the HDD 45 in the personal computer 12 as received data 51.

The PC display controller 47 supplies the display still image data saved in the HDD 45 of the personal computer 12 to the large size LCD 43. This supplying causes the LCD 43 to display an image based on the display still image data.

Here, various programs and data saved in EEPROM embedded in the custom IC23, EEPROM embedded in the DSP 25, and EEPROM 65 embedded in the ASIC 24 of the ultra- small wide -angle camera device 1 and a memory device such as the HDD 45 in the personal computer 12 may be already saved in these memory devices before shipping or may be installed and saved in these memory devices after shipping. Programs and data installed in these memory devices after shipping may be saved in a recording medium such as CD-ROM not shown in the figure or may be obtained from a communication medium such as Internet not shown in the figure.

Further, a part of various programs and data may be installed after shipping. The client program saved in the HDD 45 of the personal computer 12 may be saved as a combination of an operating system with an application program. Further, the client program may be saved as a combination of an operating system, a browsing program with a plug in program executing as a part of the browsing program. Further, these browsing program and plug in program may be installed after shipping the personal computer 12.

Next, the operation of the monitoring system 13 comprising the above constitutions will be explained.

The fish eye lens 9 of the ultra-small wide -angle camera device 1 concentrates light as a subject by a wide view angle of 180 degree or more. The CMOS imaging device 21 receives subject light concentrated by the fish eye lens 9 at the light receiving surface 22 and produces brilliance image data of an image focused on the light receiving surface 22. The CMOS imaging device 21 produces the brilliance image data of the rectangular image including the circular image focused in the center of the light receiving surface 22 if the image is focused on the light receiving surface 22 in Fig.5. There is a little blight part due to light leaked from the camera unit 4 or light run round by diffraction in the circumferential area which is out of the range of the circular image on the brilliance image data. Graded effect is given to the circumferential area which is out of the range of the circular image.

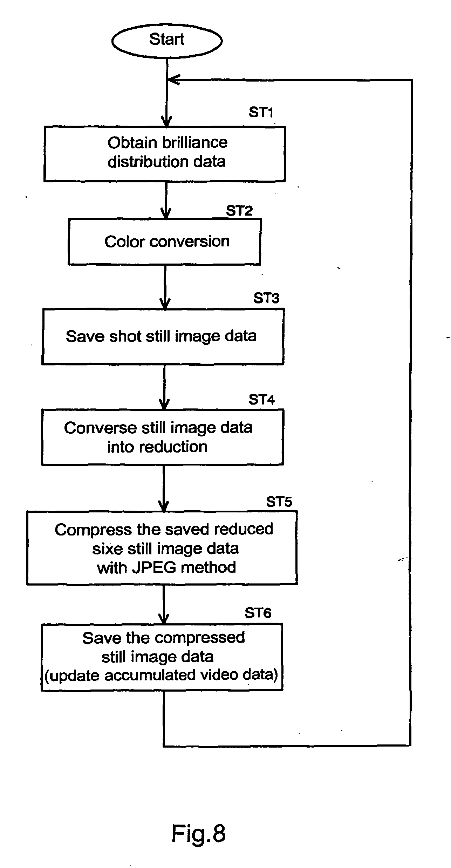

Fig.8 is a flow chart showing the imaging operation with the ultra -small and wide -angle camera device 1 in Fig.2.

When the CMOS imaging device 21 generates the brilliance image data, the color conversion processing unit 31 of the custom IC 23 reads the brilliance image data (step ST1) and starts to perform color conversion for producing the shot still image data 52(step ST2). The color conversion processing unit 31 reads a color value corresponding to each of the brilliance image data from the color conversion table saved in the EEPROM of the custom IC 23 and assigns the read value to the pixel.

The color conversion processing unit 31 supplies the produced still image data 52 to the camera file saving unit 33 in the ASIC 24. The camera file saving unit 33 saves the supplied still image data 52 to the HDD 26 in the ultra-small wide-angle camera device 1 (step ST3). This saving causes the HDD 26 in the ultra-small wide-angle camera device 1 to memorize the shot still image data 52 including the shot update circular image.

The camera file saving unit 33 saves the update still image data 52 to the HDD 26 and informs the process management unit 35 of it. If the process management unit 35 receives the information of the saving from the camera file saving unit 33, it instructs the image conversion unit 34 to perform conversion and instructs the JPEG engine 36 to perform compression.

If the image conversion unit 34 receives the instruction of the conversion due to the saving of the update still image data 52 into the HDD 26, the image conversion unit 34 reads the update still image data 52 and starts to produce the reduced size still image data 53. More specifically, first, the image conversion unit 34 produces predetermined image data having less pixel numbers, which is shown as a rectangular dot -line frame in Fig.7. Here, the initial value of each pixel data in the image may be a single color such as black.

After the image conversion unit 34 produces the image data shown as a rectangular dot -line frame in Fig.7, it assigns a plurality of pixels data of the circular image in the shot still image data 52 into each of pixels of the produced image data having less numbers of pixels in accordance with the conversion rule data 68 saved in the EEPROM 65. In the embodiment, as shown in Fig.7, the image conversion unit 34 produces the reduced size still image data 53 having less pixel numbers from the shot still image data 52 without reducing the information regarding the circular image in the shot still image data 52. The image conversion unit 34 stores the generated reduced size still image data 53 into the HDD 26(step ST4).

If the reduced size still image data 53 is saved in the HDD26, the JPEC engine 36 reads the reduced size still image data 53 saved in the HDD 26 and starts to compress the reduced size still image data 53 (step ST5).

More specifically, during compressing, the JPEG engine 36 reads a plurality of pixel data of the reduced size still image data 53 saved in the HDD 26 every block unit and executes DCT to them and entropy coding to them every block unit. These executions enable the JPEG engine 36 to produce the still image data by compressing the reduced size still image data 53 with the JPEG method.

The JPEG engine 36 adds time information measured by the timer to the produced and compressed still image data and then stores the image data into the HDD 26 in the ultra -small wide -angle camera device 1 (step ST6). Namely, the compressed still image data formed by compressing the update reduced size still image data 53 is saved in HDD 26 in the ultra -small wide -angle camera device 1.

The CMOS imaging device 21 generates the brilliance image data every predetermined imaging frequency. The ultra-small wide -angle camera device 1 performs imaging operation shown in Fig.8 every time of generating the brilliance image data. This imaging operation enables the HDD 26 of the ultra -small and wide -angle camera device 1 to memorize a plurality of compressed still image data based on the brilliance image data generated by the CMOS imaging device 21. Accumulated video data 54 comprising a plurality of compressed still image data is produced in the HDD 26 of the ultra -small wide -angle camera device 1. Accumulated video data 54 is updated every time when the JPEG engine 36 forms new compressed still image data by adding the new compressed still image data to the video.

Alternatively, accumulated video data 54 may be video data based on the moving picture experts group (MPEG). Video data based on MPEG may be produced, for example, as being compressed by the MPEG engine not shown in the figure after a plurality of reduced size still image data 53 are accumulated in the HDD 26.

The input device 42 of the personal computer 12 generates input data based on key operation by a user while video information and recording such image are preformed in the ultra -small wide -angle camera device 1 based on operations shown in Fig.8.

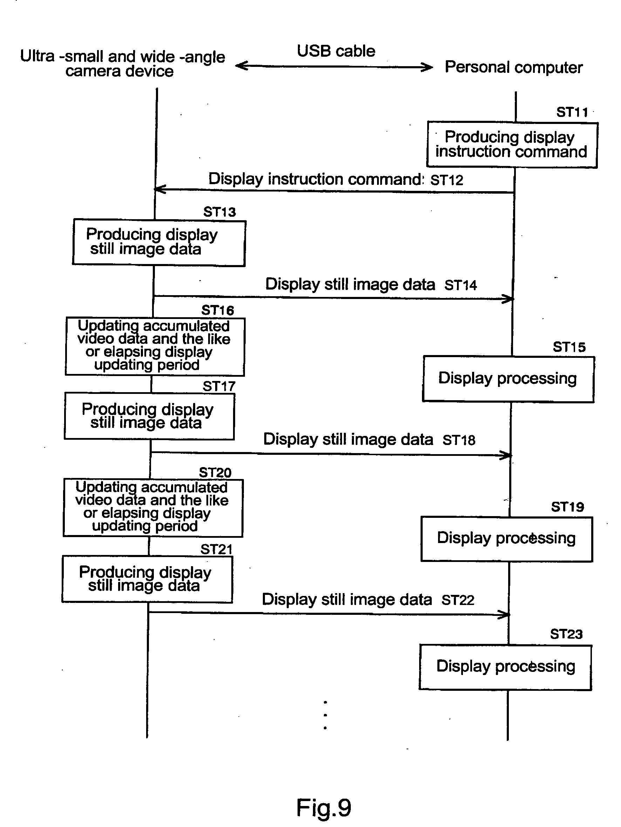

Fig.9 is a flow chart showing the operation of reproducing an image with the monitor system 13 in Fig.2. The input device 42 of the personal computer 12 supplies the generated input data to the PC display controller 47 of the microcomputer 41. The PC display controller 47 produces display instruction commands based on input data (step ST11).

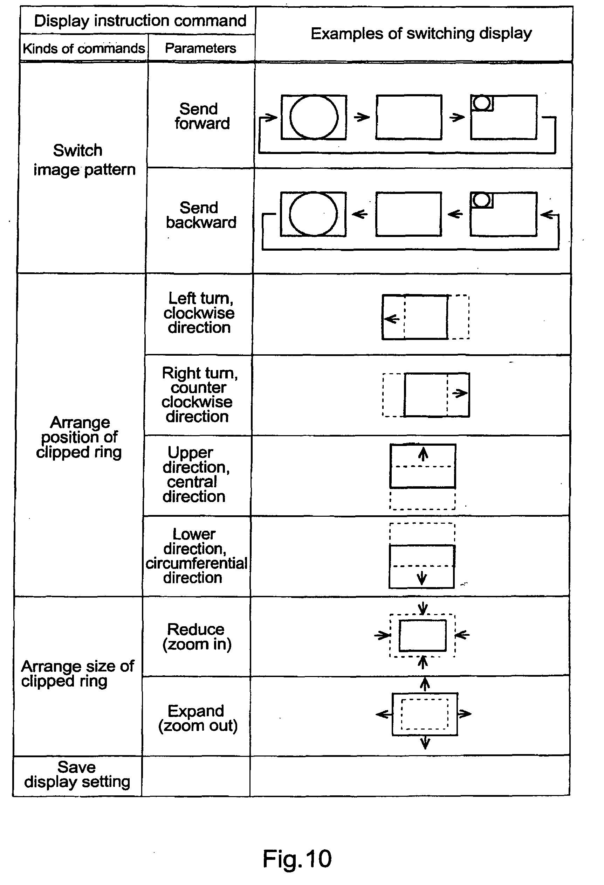

Fig.10 is an illustrative diagram showing examples of display instruction commands produced by the PC display controller 47 in Fig.2 based on the input data. The PC display controller 47 produces two kinds of image pattern switching commands, four kinds of clipped ring- position arranging commands, a clipped ring size arranging command, and a display setting saving command, as shown in Fig.10. The PC display controller 47 further produces a display disclosure instruction command, a time designation command, a display ending instruction command for example except commands show in Fig.10.

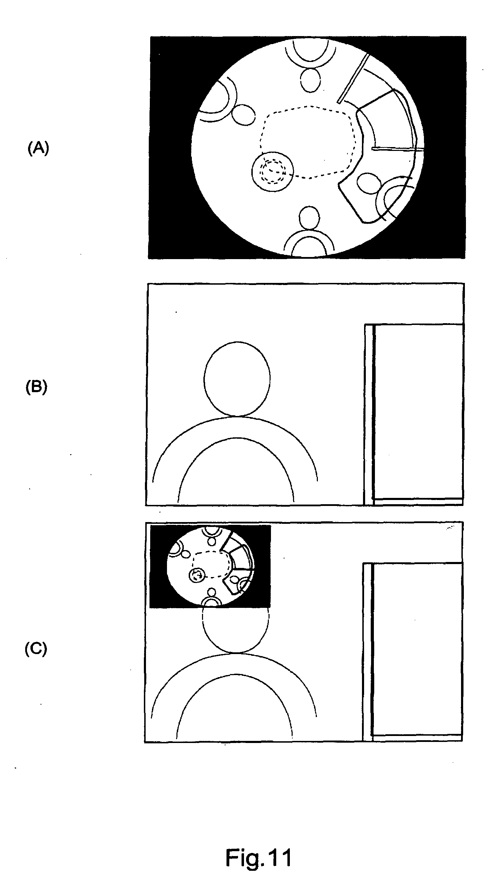

Figs.11 (A) to (C) are diagrams showing examples of display combinations displayed by the large sized LCD 43 of the personal computer 12 in Fig.2. Fig.11 (A) is an example of a wide angle screen with its aspect ratio 4:3 imaged by the ultra-small wide -angle camera device 1. Fig.11 (B) is an example of a clipped screen with its aspect ratio 4:3, which is obtained by clipping the range within the solid line frame in Fig.11 (A). The solid line frame in Fig.11 (A) is called as a clipped ring hereafter. Fig.11 (C) is an example of double images screen. One of the double images screen is the reduced wide angle image which its aspect ratio is 4:3 is assigned on the upper and left corner of the clipped image, the other one is the same clipped screen in Fig.11 (B).

Of display instruction commands produced by the PC display controller 47 based on the input data, the display disclosure instruction command is to instruct to start a display of the wide angle screen as the circular image in Fig.11 (A). The time designation command is to designate time for starting display of an image. The display ending instruction command is to instruct to end displaying an image. The display setting saving command is to save display setting at that time into the ultra-small wide -angle camera device 1.

The image pattern switching command shown in Fig.10 is to instruct to switch three screens of a wide angle screen in Fig.11 (A), a clipped screen in Fig.11 (B) and the double images screen in Fig.11 (C). The PC display controller 47 instructs switching three screens in a predetermined order or switching three screens in a reversed order with two kinds of image pattern switching commands.

The clipped ring- position arrangement command is to instruct to move the clipped image. The PC display controller 47 instructs to switch the range of an image clipped from the wide angle image to the upper or lower or left or right direction (the center direction, circumferential direction, clock wise direction and outer clockwise direction viewed from a wider angle screen) in accordance with the four kinds of clipped ring- position arranging commands.

The clipped ring- size arranging command is to instruct to enlarge or reduce the clipped image. The PC display controller 47 instructs to reduce the size of a clipped image from the wide angle image, expanding magnification (zooming in) described later or to enlarge the size of a clipped image from the wide angle image, reducing expanding magnification (zooming out) described later, in accordance with two kinds of clipped ring- size arranging commands.

The PC display controller 47 supplies the produced display instruction command to the host communication unit 46. The host communication unit 46 stores the supplied display instruction command to the communication buffer of the class processing unit 50. The class processing unit 50 of the host communication unit 46 sends the display instruction command saved in the communication buffer to the class processing unit 39 of the device communication unit 38 through the USB connector 44 of the personal computer 12, the USB cable 11 and the USB connector 7 of the ultra-small wide -angel camera device 1. The display instruction command is saved in the communication buffer of the device communication unit 38 in the ultra-small wide -angel camera device 1 (step ST12).

The device communication unit 38 in the ultra-small wide -angel camera device 1 supplies the display instruction command received by the communication buffer to the process controller 35 of the ASIC 24. The ultra-small wide -angel camera device 1 starts to generate a display still image based on the instruction from the process controller 35 (step ST 13).

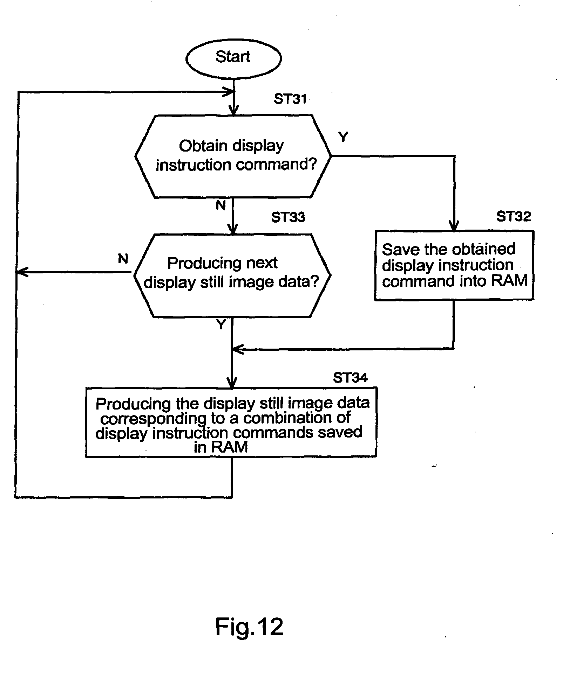

Fig.12 is a flow chart showing the operation of producing a display still image data by the ultra-small wide -angel camera device 1. First, the process controller 35 of the ASIC 24 in the ultra-small wide -angel camera device 1 determines whether it receives the display instruction command or not (step ST 31). Second, the process controller 35 saves the received display instruction command to the RAM 64 of the ASIC 24 and HDD26 after receiving the display instruction command (step ST 32).

If it does not receive the display instruction command, the process controller 35 determines whether generation of next display still image data is necessary or not (step ST 33). The process controller 35 determines the necessity of generating the next display still image data if the accumulated video data 54 is renewed or display update period is measured by a timer. The process controller 35 determines that generating the next display still image data is not necessary except the above. If generating the next display still image data is not necessary, the process controller 35 returns the step ST 31 and determines whether the display instruction command is obtained or not. The accumulated video data 54 is updated by adding the compressed data every time when the JPEG engine 36 compresses the shot still image data 52. The process controller 35 may determine whether the shot still image data 52 is updated or not, instead of determining whether the accumulated video data 54 is updated or not.

Accordingly, the process controller 35 waits to obtains the display instruction command, and waits updating the accumulated video data 54 and the elapse of display updating frequency (step ST 31 to ST 33). Under such circumstance, as shown in Fig.9, if the device communication unit 38 in the ultra-small wide -angel camera device 1 receives the display instruction command, the process controller 35 saves the received display instruction command to the RAM 64 and the like.

The process controller 35 instructs to generate the display still image data based on the combination of display instruction commands saved in the RAM 64 after it saved the received display instruction command to the RAM 64 (step ST 34).

For example, if the process controller 35 determines that the display of a real time wide-angle image is instructed based on the combination of display instruction commands saved in the RAM 64, it instructs the display image producing unit 32 to produce wide-angle still image data based on the shot still image data 52 saved in the HDD 26.

The display image producing unit 32 obtains the shot still image data 52 saved in the HDD 26 through the ASIC 24. The display image producing unit 32 produces the display still image having a rectangular wide angle screen from the obtained shot still image data 52. The display image producing unit 32 simply produces the display still image data having a rectangular wide angle screen, and a predetermined aspect ratio and resolution, of which the data amount becomes small due to thinning a plurality of pixel numbers from an image of the shot still image data 52 for example. Here, the predetermined aspect ratio and the resolution of the display still image data having a wide angle screen may be the same of the aspect ratio and the resolution of the LCD 43.

As other function more than the above, if the process controller 35 determines that the display of a real time wide-angle image is instructed based on the combination of display instruction commands saved in the RAM 64, it instructs the display image producing unit 32 to produce the display still image data of a clipped screen based on the shot still image data 52 saved in the HDD 26.

The display image producing unit 32 obtains the shot still image data 52 saved in the HDD 26 through the ASIC 24. The display image producing unit 32 specifies clipped ring position and size in accordance with a combination of display instruction commands saved in RAM 64 and clips an image within the range of the specified clipped ring position and size from the image of the obtained shot still image data 52. The display image producing unit 32 performs the outline correction of the image and/or skew correction (such as correction of distortion ) and/or interpolation so that the clipped image becomes a rectangular image including the outline of the clipped image and its resolution as the predetermined aspect ratio and value. Accordingly, the display image producing unit 32 produces the display still image data of a clipped screen which is expanded so as to fit to the size of the large size LCD 43 of the personal computer 12 for example.

As other functions more than the above, if the process controller 35 determines that the display of the image of the past wide angle screen is instructed based on the combination of the display instruction commands saved in the RAM 64, it instructs the JPEG engine 36 to expand the compressed still image data at the past time instructed by the display instruction command. Further, it instructs the image conversion unit 34 to perform the inverse transformation of the expanded still image data 55 generated by expanding and instructs the display image producing unit 32 to produce the still image data having a wide screen based on the original -size reproduced still image data 56 produced by the inversed transformation with the image conversion unit 34.

The JPEG engine 36 reads the compressed still image data at the time designated from the accumulation video data 54 saved in the HDD 26 and expands it if it receives the instruction of expanding the compressed still image data at the past predetermined time. More specifically, for example, the JPEG engine 36 analyzes the read compressed still image data, and executes entropy encoding and inverse DCT conversion to them to produce the expanded still image data 55. The JPEG engine 36 saves the produced expanded still image data 55 into the HDD 26.

The image conversion unit 34 reads the expanded still image data 55 saved in the HDD 26 and inverse-transforms it if it receives the instruction of the inverse transformation. More specifically, first, the image conversion unit 34 generates pixel data which is the same pixel numbers and alignments of the shot still image data 52. The initial value of a plurality of the pixel numbers of the image is a value of single black for example.

The image conversion unit 34 assigns each pixel data in the expanded still image data 55 into the plurality of pixels of the generated image data after it generates pixel data which is the same pixel numbers and alignments of the compressed still image data 53. The image conversion unit 34 moves pixel data at four corners in the image of expanded still image data 55 into the right and left portions or the lower portion of the expanded still image data 55 by moving them toward directions which are inversed directions indicated by arrows in Fig.7 for example.

The image conversion unit 34 produces the original -size reproduced still image data 56 by the above processes. The original -size reproduced still image data 56 includes the same pixel numbers and pixel alignments of the shot still image data 52 and has the circular image in the center. The pixel numbers and pixel alignments of the circular image of the original -size reproduced still image data 56 is the same of that of the shot still image data 52. The image quality of the circular image of the original -size reproduced still image data 56 is approximately equal to or slightly lower than that of the circular image of the shot still image data 52. The image conversion unit 34 stores the generated original- size reproduced still image 56 into the HDD 26.

The display image producing unit 32 obtains the original- size reproduced still image 56 saved in the HDD 26 through the ASIC 24. The display image producing unit 32 simply produces the display still image data having a rectangular wide angle screen, and a predetermined aspect ratio and resolution, of which the data amount becomes small due to thinning a plurality of pixel numbers from an image of the original- size reproduced still image 56 for example.

Accordingly, the display image producing unit 32 produces the display still image data in response to the combination of display instruction commands saved in the RAM 64. If a combination of the display instruction commands saved in the RAM 64 is updated by receiving a new display instruction command, the display image producing unit 32 produces the display still image data in response to such update combination. The ultra-small wide-angle camera device 1 completes producing the still image data on step ST13 in Fig.9.

When the display image producing unit 32 produces the display still image data, the device communication unit 38 of the ultra-small wide-angle camera device 1 sends the display still image data produced by the display image producing unit 32 to the host communication unit 46 of the personal computer 12 as shown in Fig.9 (step ST14).

More specifically, the display still image data is sent to the host communication unit 46 through the communication buffer of the device communication unit 38, the USB connector 7 of the ultra -small wide-angle camera device 1, the USB cable 11, the USB connector 44 of the personal computer 12 and the communication buffer of the host communication unit 46.

The host communication unit 46 supplies the received display still image data to the PC saving process unit 48. If the PC saving process unit 48 receives the communication data such as the display still image data from the host communication unit 46, it saves the received communication data to the HDD 45 of the personal computer 12. Namely, the display still image data is saved as the received data 51 in the HDD 45 of the personal computer 12.

The PC saving process unit 48 informs the PC display control unit 47 of the saving of the display still image data to the HDD 45. The PC display control unit 47 reads the display still image data from the HDD 45 of the personal computer 12 and supplies it to the large size LCD 43 as display data.

Accordingly, this data supplying enables the large size LCD 43 of the personal computer 12 to display the image corresponding to the display instruction command produced by the PC display control unit 47 (step ST15).

For example, if the PC display control unit 47 produces an image pattern switching command indicating the display of an wide angle screen (a circular image), the large size LCD 43 of the personal computer 12 displays the wide angle screen shown in Fig.11 (A). In the wide angle screen, the circumferential area which is outside of the circular image is displayed as a uniform black color.

Further, if the PC display control unit 47 produces an image pattern switching command indicating the display of a clipped screen, the large size LCD 43 of the personal computer 12 displays the clipped screen shown in Fig.11 (B). The clipped screen is produced by clipping a part of the circular image (the shot still image data 52 and the like) and expanding it.

Further, if the PC display control unit 47 produces an image pattern switching command indicating the display of a double images screen, the large size LCD 43 of the personal computer 12 displays the double images screen shown in Fig.11(C). The double images screen comprises the circular image having less reduced data amount (the shot still image data 52 and the like) and the clipped expanded image formed by clipping a part of the circular image and expanding it.

As other function more than the above, if the PC display control unit 47 produces an clipped ring position arrangement command which moves the clipped position, the large size LCD 43 of the personal computer 12 displays the clipped screen of which an image center is slightly moved to upper or lower or right or left direction compared to the screen in Fig.11 (B). This clipped screen is also expanded.

Further, if the PC display control unit 47 produces a clipped ring size arrangement command which expands and reduces the clipped screen, the large size LCD 43 of the personal computer 12 displays the clipped screen in which the clipped range of the image is large or small compared to the screen in Fig.11 (B).

Accordingly, the large size LCD 43 of the personal computer 12 displays an image based on the display still image data. On the other hand, the ultra-small wide-angle camera device 1 repeats the processes execution of producing the display still image data shown in Fig.12.

Then, as shown in Fig.9, when the accumulated video data 54 saved in the HDD 26 of the ultra-small wide-angle camera device 1 is updated and a display renewal period is elapsed (step ST16), the process controller 35 instructs to produce a next display still image based on a combination of the display instruction commands saved in the RAM 64 (step ST17). The JPEG engine 36 and the display image producing unit 32 produce the next display still image data in accordance with the instruction of producing a next display still image from the process controller 35. The device communication unit 38 sends the produced display still image data to the host communication unit 46 of the personal computer 12 (step ST18). The PC saving process unit 48 saves the received display still image data into the HDD 45. The PC display control unit 47 reads the display still image data from the HDD 45 of the personal computer 12 and supplies it to the large size LCD 43 of the personal computer 12 as display data. Accordingly, the large size LCD 43 of the personal computer 12 displays an image based on the next display still image data (step ST19).

The next display still image data is based on a combination of display instruction commands saved in the RAM54 of the ultra-small wide-angle camera device 1 and also based on the display instruction commands which are the same of the first display still image data. Hence, if there is a change of sceneries viewed by the fish eye lens 9 between these two display still image data (the display image based on the initial display image data and the second display image based on the next still image data) such as a person's moving, the large size LCD 43 of the personal computer 12 reveals such change as a screen change.

After the above processes, the process controller 35 of the ultra-small wide-angle camera device 1 repeats the executions of producing the next still image data and sending it (steps ST 21 and ST 22) every time when the accumulated video data 54 saved in the HDD 26 is updated or the display update period is elapsed as shown in Fig.9 (step ST 20). The large size LCD 43 of the personal computer 12 displays the newly received still image (step ST 23).

Finally, the large size LCD 43 of the personal computer 12 displays a video formed with a plurality of still images continuously and newly shot by the ultra-small wide-angle camera device 1 (steps ST 15, ST 19, ST 23).

On the other hand, the PC display control unit 47 of the personal computer 12 produces a newly display instruction command based on new input data if it receives a new input data from the input device 42 and send it to the ultra-small wide-angle camera device 1. This another command transmission is performed regardless of the above process in that the ultra-small wide-angle camera device 1 sends the plurality of the display still image data continuously shot based on the predetermined display instruction command to the personal computer 12 during this another command transmission.

Then, a combination of display instruction commands saved in the RAM 64 of the ultra-small wide-angle camera device 1 is updated. For example, the combination of display instruction commands saved in the RAM 64 is updated from instructions for displaying a wide angle screen to instructions for displaying a clipped screen. If a combination of display instruction commands saved in the RAM 64 of the ultra-small wide-angle camera device 1 is updated, the process controller 35 changes an instruction thereafter depending on the updating. Accordingly, the video displayed by the large size LCD 43 of the personal computer 12 is switched from the video in the wide angle screen in Fig.11 (A) to the video in the clipped image screen in Fig.11 (B) for example thereby.

Here, the operation of the monitor system 13 described above is a case when the large size LCD 43 of the personal computer 12 displays the video taken by the ultra-small wide-angle camera device 1 or a related video based on it. As other function more than the above, the monitor system 13 of this embodiment enables the LCD 5 of the ultra-small wide-angle camera device 1 to display a wide angle video taken by the ultra-small wide-angle camera device 1 or a clipped image based on it. In such case, the input device 22 of the ultra-small wide-angle camera device 1 may produce a display instruction command, the display image producing unit 32 may produce the display still image data for the LCD 5 of the ultra-small wide-angle camera device 1 and the LCD 5 of the ultra-small wide-angle camera device 1 may display an image based on the display still image data produced by the display image producing unit 32.

Further, it was explained in the above that the operation of the monitor system 13 is the process for shooting a video and the process for displaying the image based on the video by the LCD43. The ultra-small wide-angle camera device 1 also includes the microphone 27. The microphone 27 generates a sound signal such as a voice. The A/D converter 28 samples the sound signal and saves the sound signal into the camera file saving unit 33 in the ASIC24. The camera file saving unit 33 saves the supplied sound data to the HDD 26 in the ultra-small wide-angle camera device 1. Accordingly, the accumulated sound data 57 is saved in the HDD 26 of the ultra -small wide-angle camera device 1. The ultra-small wide-angle camera device 1 may send the accumulated sound data 57 with the display still image data produced by the display image producing unit 32 to the personal computer 12 and the personal computer 12 may output the sound such as a voice based on the accumulated sound data 57 from a speaker not shown in the figure. Accordingly, the personal computer 12 can produce a video and sounds, monitored by the ultra-small wide-angle camera device 1.

As stated above, in the monitoring system 13 regarding the embodiment, the ultra-small wide-angle camera device 1 is coupled to the personal computer through the USB cable 11. Further, the CMOS imaging device 21 in the ultra-small wide-angle camera device 1 generates brilliance image data including a circular image. The color conversion processing unit 31 produces the shot still image data 52 having a rectangular shape and including a circular image. The image conversion unit 34 produces the reduced size still image data 53 of which pixel numbers are smaller than that of the shot still image data 52. The reduced size still image data 53 includes a plurality of pixel data constituting a circular image. The JPEG engine 36 compresses the e reduced size still image data 53 with the JPEG method. The HDD 26 saves the accumulated video data 54 comprising a plurality of the compressed still image data. The JPEG engine 36 expands the still image data saved in the HDD 26. The image conversion unit 34 produces the original -size reproduced still image data 56 of which pixel numbers and an image size are equal to that of the shot still image data 52 from the still image data (the expanded still image data 55) expanded by the JPEG engine 36. The original -size reproduced still image data 56 includes a plurality of image data constituting a circular image. The display image producing unit 32 produces display image data that are displayed by the LCD 43 of the personal computer 12 and the LCD 5 of the display image producing unit 32 from the original -size reproduced still image data 56.

Accordingly, the monitor system 13 of the embodiment 1 enables the LCD 43 of the personal computer 12 and the LCD 5 of the ultra -small wide-angle camera device 1 to display the clipped image. This clipped image is produced by the following. The pixel numbers of the shot still image data 52 shot by the ultra-small wide-angle camera device 1 is reduced, and compressed by the JPEG method. Then, such reduced and compressed data is expanded to be back to the original size. Further, the desired arbitrary range is clipped from the backed still image data (the original size reproduction still image data 56) and only the clipped range is expanded to obtain the clipped image.

In addition to the above functions, the image conversion unit 34 converts the circular image portion shot by the fish eye lens 9 within the shot still image data 52 into the reduced size still image data 53 having a rectangular image. The JPEG engine 36 compresses the reduced size still image data 53 by the JPEG method. The pixel numbers of the reduced size still image data 53 are smaller than that of the shot still image data 52. Hence, the data amount of the compressed still image data produced by the JPEG engine 36 is fairly reduced compared to a case when the shot still image data 52 is compressed by the JPEG method.

For example, if the aspect ratio of the shot still image data 52 is 4:3 and the height of the shot still image based on the shot still image data 52 is equal to that of the circular image, the ratio of pixel numbers of the circular image to that of the shot still image becomes 0.589(=3.14xr²/(2rx(2rx4/3))). In the above formula, "r" is a radius of the circular image. Accordingly, it is possible that the data amount of the reduced size still image 53 in accordance with the conversion rule of pixel alignments in Fig.4 is about 0.589 times of the data amount of the case when the shot still image data 52 is compressed by the JPEG method.

As the result of it, the compressing method according to the monitor system 13 of the embodiment 1 can remarkably reduce the data amount of the shot still image after compression compared to the case when the shot still image data 52 based on the image shot by fish eye lens 9 is directly compressed by the JPEG method.

In addition to the above feature, a plurality of the pixel data of the circular image among the rectangular shot still image are remained as each pixel data of the reduced size still image data 53. Namely ,the image quality of the circular image which is compressed by the JPEG method and further expanded is maintained as to be equal to the image quality of the case when the shot still image data 52 based on the image shot by fish eye lens 9 is directly compressed by the JPEG method. Accordingly, saved data amount can be effectively reduced without deteriorating the quality of the circular image.

Here, in this embodiment, the JPEG engine 36 compresses all the plurality of the shot still image data 52 which are updated every time when it is continuously shot by the CMOS imaging device 21 by the JPEG method and these data are saved as the accumulated video data 54. More than the above method, for example, the JPEG engine 36 may compress a part of the plurality of the shot still image data 52,which are updated when it is continuously shot by the CMOS imaging device 21, every other data by the JPEG method and may save it , further reducing the data amount accumulated as the accumulated video data 54. If the shot still image data 52 is compressed every other data by the JPEG method and saved, the frame rate of the accumulated video data 54 becomes a half of that of the image shot by the CMOS imaging device 21.

In the embodiment 1, the CMOS imaging device 21 includes three million pixels. Hence, The JPEG engine 36 expands the compressed still image data , the image conversion unit 34 returns it into the original image size and the display image producing unit 32 clips a part of the image returned to the original image size as a VGA size or more.

Accordingly, a display image having more practical and high resolution can be obtained as a VGA size or more by clipping a desired range from the still image data saved in the HDD 26 and expanding the clipped range while the memory region for saving of the accumulated video data 54 in HDD 26 can be effectively reduced.

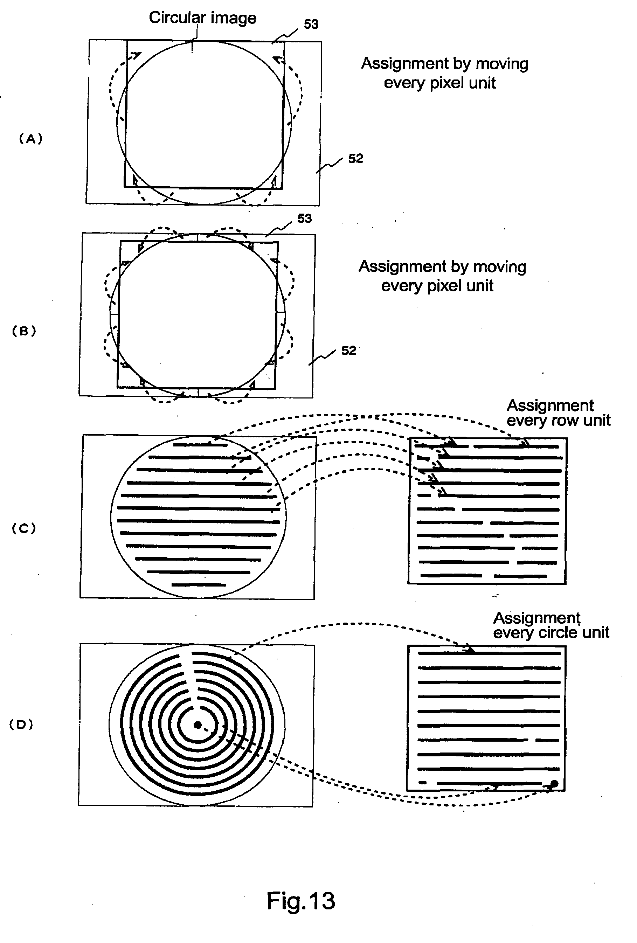

Fig.13 (A) to (D) are illustrative diagrams showing pixel conversion rules in the embodiment 1 and its modification. Fig.13(A) shows a pixel conversion rule of the circular image in the embodiment 1. Fig.13(B) shows a pixel conversion rule of the circular image in a first modification of the embodiment 1. Fig.13(C) shows a pixel conversion rule of the circular image in a second modification of the embodiment 1. Fig.13 (D) shows a pixel conversion rule of the circular image in a third modification of the embodiment 1.

In the embodiment 1, the image conversion unit 34 converts the circular image data in the shot still image data 52 into a small image by the following. As shown in Fig.13 (A), in accordance with the conversion rule of the conversion rule data 68, the image conversion unit 34 moves and assigns the pixel data in the circular image data which have run over from the rectangular image of the reduced size still image data 53 to the pixel positions at the four corners of the rectangular shape of the reduced size still image data 53.

As other method more than the above, the image conversion unit 34 may divide each of protruded four arcs into a half portion and assign it into the four corners positions shown in Fig.13(B) in accordance with the other conversion rule of the conversion rule data 68 .

Further, as shown Fig.13(C), the image conversion unit 34 may convert the circular image in the shot still image data 52 into a small image by collecting up and assigning a plurality of pixel data to every row of the image data.

Further, as shown in Fig.13 (D), in accordance with the conversion rule of the conversion rule data, the image conversion unit 34 may convert the circular image in the shot still image data 52 into a small image by collecting up and assigning a plurality of pixel data, which are circularly arranged as making a central pixel of the circular image be centered, every circular unit.

In the embodiment 1, the image conversion unit 34 produces the reduced size still image data 53 as a rectangular image of which pixel numbers are equal to that of the circular image of the shot still image data 52 as shown in Fig.7, in accordance with the conversion rule of the conversion rule data 68.

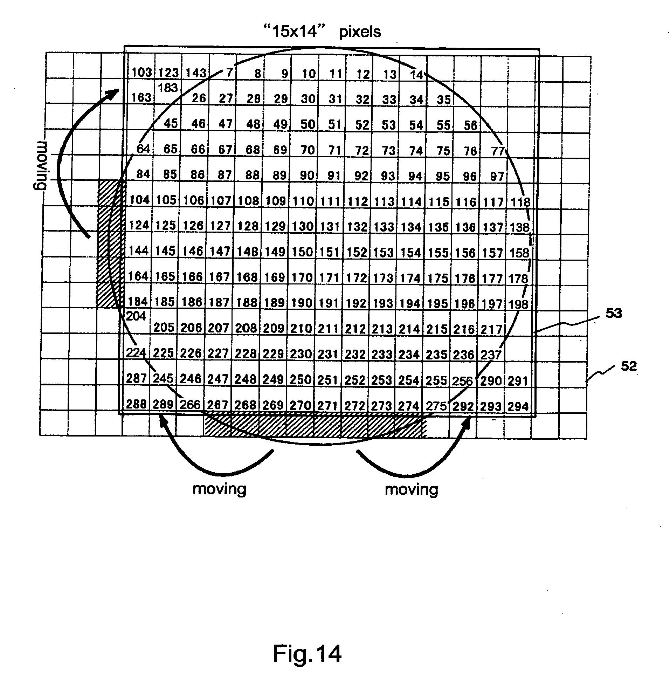

As other method more than the above, for example, the image conversion unit 34 may produce the reduced size still image data 53 as a rectangular image of which pixel numbers are larger than that of the circular image of the shot still image data 52 as shown in Fig.14, based on the other conversion rule of the conversion rule data 68. In the example of Fig.14, pixel numbers of the reduced size still image data 53 are larger than that of the circular image of the shot still image data 52 by the amount of one row.

Her in the modification, there exists pixels which are not assigned as pixel data of the circular image within the reduced size still image data 53 (pixels not be numbered in Fig.14) since pixel numbers of the image of the reduced size still image data 53 are larger than that of the circular image of the shot still image data 52. In such case, the image conversion unit 34 may assign image data including a single color like a black color or an approximately uniformed color to pixels which are not assigned as pixel data of the circular image.

If the colors of the plurality of pixels in a block compressed by the JPEG method are the same or approximately the same, the oscillatory components in a spatial frequency are not generated when the block is converted by DCT. Otherwise, the almost oscillatory components in a spatial frequency are not generated. In such block, these components become approximately constant components. Further, if blocks comprising the plurality of pixels including the same colors or approximately the same are continued, the data amount is reduced due to run length coding.

Further, in the reduced size still image data 53, the all pixels, which are not assigned as pixel data of the circular image, exist at the four corners of the image.

Accordingly, if pixels data including the same colors or approximately the same are assigned to pixels which are not assigned as pixel data of the circular image, and located at the four corners of the image, it is expected that the data amount of the circular data in the shot still image data 52 becomes approximately equal to that of the reduced size still image data 53 when the data are compressed, in spite that the numbers of pixels of the image of the reduced size still image data 53 are larger than that of the numbers of pixels of the circular image of the shot still image data 52

### [Embodiment 2]

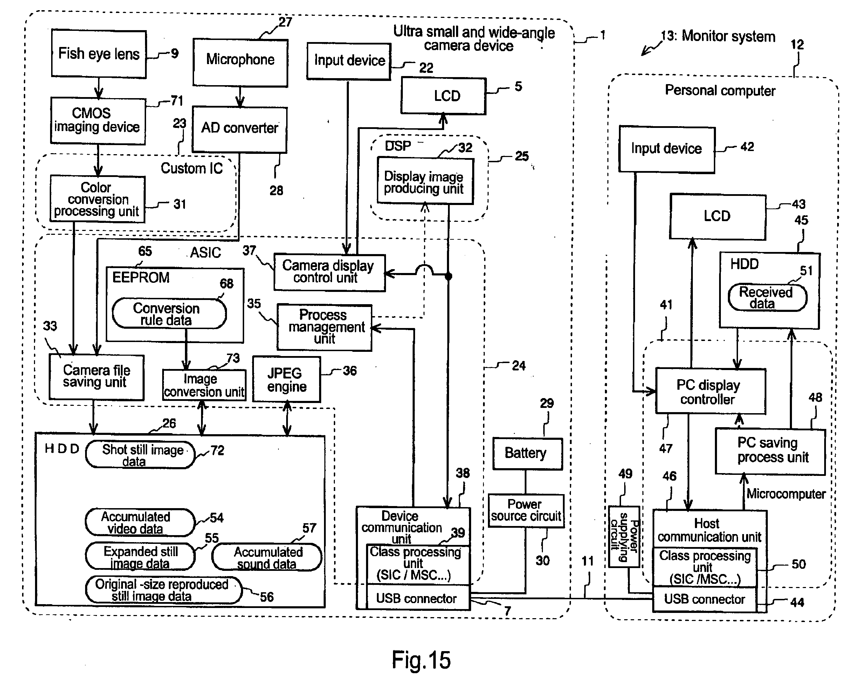

Fig.15 is a block diagram showing a functional configuration of the monitor system 13 in a second embodiment of the invention. The monitor system 13 in the second embodiment includes the ultra-small wide-angle camera device 1, the personal computer 12 coupled to the device 1 through the USB cable 11.

The ultra-small wide-angle camera device 1 in the second embodiment includes the CMOS imaging device 71 as an imaging unit for producing brilliance image data which comprises arranged pluralities of pixels in the focused circular image, and the image conversion unit 73 as an executing unit for expansion.

The monitor system 13 in the second embodiment further includes other constituents which are the same having the same function in the monitor system 13 in the first embodiment. The same reference numerals are applied to these constituents and their explanation will be omitted.

Further, in the second embodiment, the CMOS imaging device 71 generates the brilliance image data based on the plurality of light receiving elements where the circular image is concentrated. Namely, the image conversion unit 73 in the second embodiment does not convert the reduction of the image.

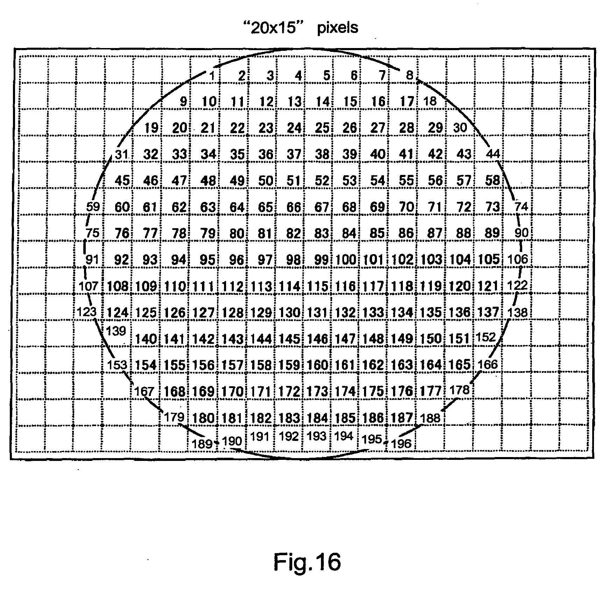

Fig.16 is a diagram showing the relationship between the alignment of a plurality of light receiving elements and its address regarding the CMOS imaging device 71 in Fig.15. In the CMOS imaging device 71, address values from 1 to 196 are assigned only to a plurality of light receiving elements within the range where the circular image is focused among light receiving elements which are aligned on the light receiving surface of the CMOS imaging device 71. On the other hand, in the CMOS imaging device 21 of the first embodiment, address values from 1 to 300 are assigned to a plurality of light receiving elements which are aligned on the light receiving surface of the device 21.

The CMOS imaging device 71 reads light amounts of a plurality of light receiving elements to which address values are assigned and generates the rectangular brilliance image data.

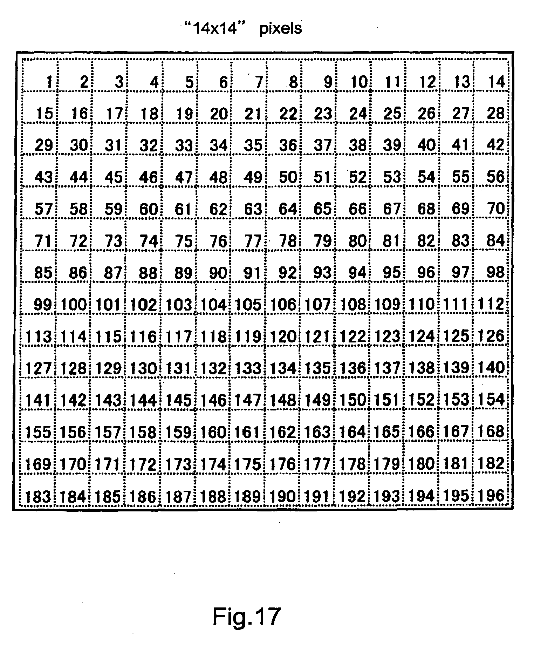

Fig.17 is an illustrative diagram showing pixel alignments based on brilliance image data generated by the CMOS imaging device 71 in Fig.15. The CMOS imaging device 71 generates brilliance image data such as a rectangular image comprising "14x14" pixels for example as shown in Fig.17. In Fig.17, address numbers are assigned to each of light receiving elements in the grid corresponding to each of pixels of the image in Fig.16. Pixel data regarding a plurality of pixels where the circular image is focused are assigned to a plurality of pixels of the image of the brilliance image data.

If the CMOS imaging device 71 generates brilliance image data to which the brilliance of the circular image is assigned, the color conversion process unit 31 of the custom IC 23 assigns a color value corresponding to the brilliance of each pixel of brilliance image data to the pixel and produces the shot still image data 72. The camera file saving unit 33 of the ASIC 24 saves the shot still image data 72 produced by the color conversion process unit 31 into the HDD 26.

After the camera file saving unit 33 saves the shot still image data 72 to the HDD 26, it informs the processing management unit 35 of the saving. The processing management unit 35 instructs the JPEG engine 36 to compress the data. The JPEG engine 36 reads the shot still image data 72 saved by the HDD 26 and compresses it by the JPEG method. The JPEG engine 36 updates the accumulated video data 54 saved in the HDD 26 based on the compressed still image data produced by the compression with the JPEG method.

Then, when the process management unit 35 saves a display instruction command newly received from the personal computer 12 into the RAM 64 for example, it determines the instruction of displaying the image in the past wide angle screen based on the combination of the display instruction command saved in the RAM 64. The process management unit 35 instructs the JPEG engine 36 to expand the compressed still image data at the past time designated by the display instruction command and instructs the image conversion unit 73 to perform an inverse conversion against the expanded still image data 55. Further, it instructs the display image producing unit 32 to produce the display still image of the wide screen based on the original-size reproducing still image data 56 produced by the inverse conversion by the image conversion unit 73.

If the expanded still image data 55 expanded by the JPEG engine 36 are saved into the HDD 26, the image conversion unit 73 produces the original-size reproduced still image data 56 from the expanded still mage data 55 saved by the HDD 26 in accordance with the conversion rule data 68 saved in EEPROM 65. The image conversion unit 73 produces the original -size reproducing still image data 56 including the pixels of which numbers and the size are the same of that for an rectangular image, base on all light receiving elements which are arranged on the light receiving surface of the CMOS imaging device 21 shown in Fig.16. The image conversion unit 73 produces the original- size reproduced still image data 56 in which a circular image is located in the center of the image and a uniform color (black for example) is coated on the peripheral area outside of the circular image. The image conversion unit 73 saves the produced original- size reproduced still image 56 into the HDD 26. The display image producing unit 32 obtains the original- size reproduced still image data 56 saved in the HDD 26 through the ASIC 24 and produces the display still image data of the wide angle image (the circular image).

As stated above, according to the second embodiment, the CMOS imaging device 72 produces brilliance image data for the rectangular image which includes the brilliance information base on the received light amount of the plurality of light receiving elements in which the circular image is concentrated and JPEG engine 36 compresses the shot still image data 72 of the rectangular image based on the brilliance image data. Accordingly, the image conversion unit 73 realized in the ASIC 24 does not need to reduce pixel numbers of the shot still image data 72 before compression. The soft ware processing by the ASIC24 makes pixel numbers of the shot still image data 72 not be reduced and the compressed still image data be produced from the brilliant image data during short time due to such no reduction.

### [Embodiment 3]

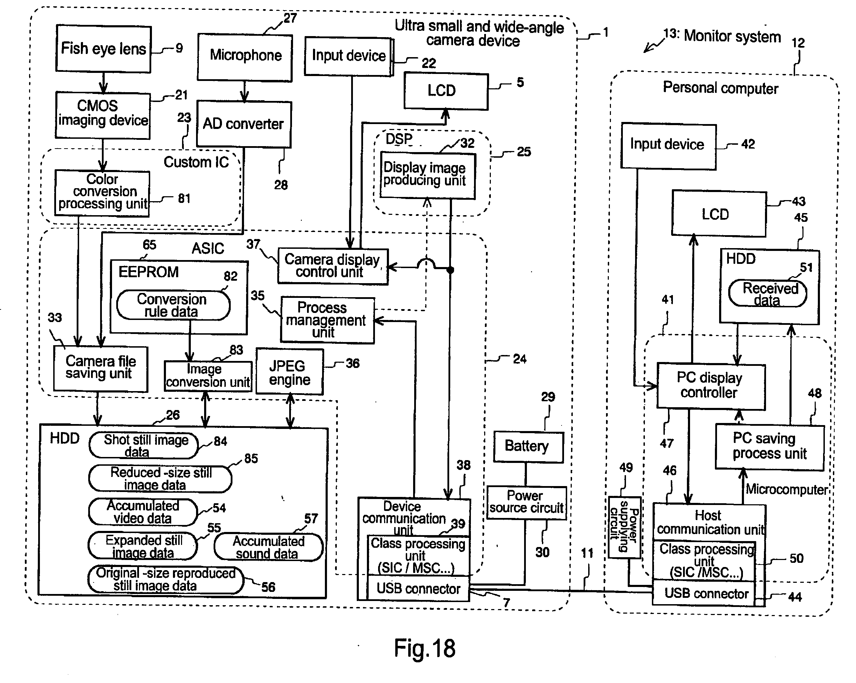

Fig.18 is a block diagram showing a functional configuration of the monitor system 13 in a third embodiment of the invention. The monitor system 13 in the third embodiment includes the ultra-small wide-angle camera device 1 and the personal computer 12 coupled to the device 1 through the USB cable 11.

The ultra-small wide-angle camera device 1 in a third embodiment of the invention comprises a color conversion processing unit 81, conversion rule data 82 and an image conversion unit 83. The color conversion processing unit 81 converts pixels outside of the circular image within the image of the brilliance image data produced by the CMOS imaging device 21 into black image data without color conversion. Conversion rule data 82 includes conversion rule as every block unit composed of a plurality o pixels instead of every pixel unit during reducing and converting the image. The image conversion unit 83 is as a conversion unit to execute the conversion and the inverse conversion of the image in accordance with the conversion rule data 82.

The monitor system 13 in the third embodiment further includes other constituents which are the same having the same function in the monitor system 13 in the first embodiment. The same reference numerals are applied to these constituents and their explanation will be omitted.

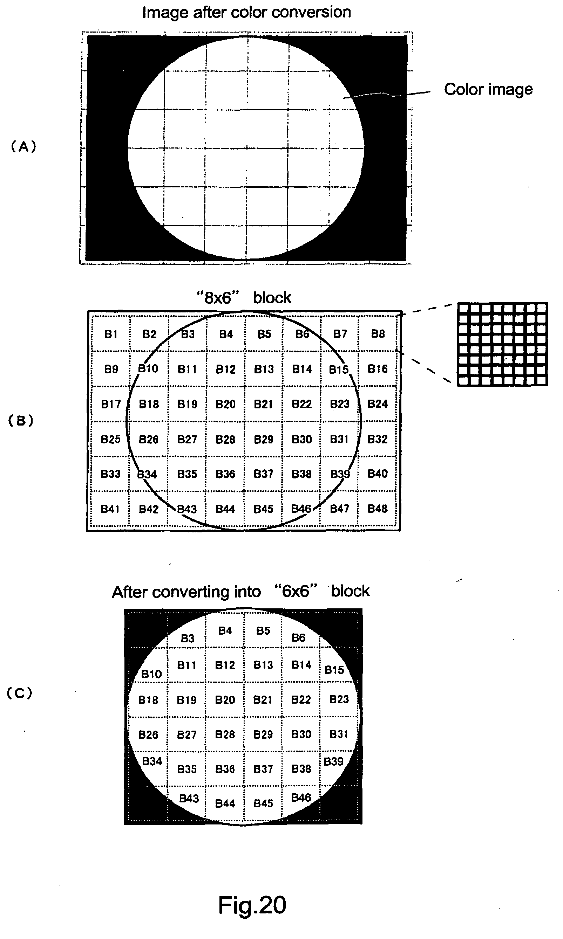

Fig. 9 is a flow chart showing the imaging operation with the ultra-small wide-angle camera device 1 in Fig. 8. Figs. 20(A) to (C) are diagrams each showing an image configuration at each of image conversion stages from the imaging operation to the compression by the ultra-small wide-angle camera device 1 .

When the CMOS imaging device 21 generates the brilliance image data, the color conversion processing unit 81 of the custom IC 23 reads the brilliance image data (step ST41) and starts performing color conversion for producing the shot still image data 84(step ST42).

During color conversion, more specifically, the color conversion processing unit 81 reads replaced region data from EEPROM, not shown in the figure, of the custom IC 23 and separates the image of brilliance distribution data produced in the CMOS imaging device 21 within the circular range from other part outside the circular range. The replaced region data is data indicating a region of color conversion using the color conversion table. The replaced region data is saved as a region in which the image data within the range of the circular image in Fig.4 is color- converted using a color conversion table for example.

Here, the predetermined circular range is preferably a part of the intrinsic subject without leaked light and diffracted light, but may be a circular range which has a slightly larger diameter including the slight circumferential area in addition to the part of the intrinsic subject. The predetermined circular range may be an eclipse range if the shot image becomes an eclipse.

Next, with respect to pixels within the image of the circular range of the brilliance image data, the color conversion processing unit 81 reads a color value corresponding to each of light receiving elements regarding a pixel from the color conversion table stored in the EEPROM of the custom IC 23 and assigns the read value to the pixel. The color conversion processing unit 81 assigns a predetermined color (black for example) to the pixel regarding pixels outside of the circular range of the brilliance image data.

Accordingly, the color conversion processing unit 81 produces the shot still image data 84 including the predetermined color distribution based on the brilliance image data as the image within the circular range specified by the replaced region data, and the predetermined specific color (uniform black for example) as the image outside of the circular range specified by the replaced region data. The color conversion processing unit 81 produces the shot still image data 84 of the image in which the circumferential area of the circular image is coated with black as shown in Fig. 20(A.)

The camera file saving unit 33 saves the shot still image data 84 produced by the color conversion process unit 81 to the HDD 26 in the ultra-small wide-angle camera device 1 (step ST43).

If the shot still image data 84 is saved in the HDD 26, the image conversion unit 83 starts converting the shot still image data 84 into the reduced size still image data 85.

More specifically, first, the image conversion unit 83 separates the image of the shot still image data 84 into a plurality of blocks such as every block unit including 8x8 pixels for example shown in Fig.20 (B). In Fig.20 (B), the image of the shot still image data 84 is separated into 48 blocks from B1 to B48.

Then, the image conversion unit 83 produces a reduced image in which a plurality of blocks obtained by the separation including the circular image are assigned and saves the reduced image data into HDD 26 as the reduced size still image data 85 (step ST 44). Fig.20 (C) is a diagram showing an example of the reduced image produced according to a way of the block separation shown in Fig.20 (B).

Accordingly, the image conversion unit 83 produces the reduced size still image data 85 of which pixel numbers are smaller than that of the shot still image data 84 and saves it into the HDD 26.

If the shot still image data 84 produced by the image conversion unit 83 is saved into the HDD 26, the JPEG engine 36 reads the reduced size still image data 85 saved in the HDD 26 and compresses it (step ST 45) and saved it into the HDD 26. Accordingly, the accumulated video data 54 saved in the HDD 26 is updated (step ST 46).

Then, when the process management unit 35 saves the display instruction command newly received from the personal computer 12 into the RAM 64 for example, it determines the instruction of displaying the image in the past wide angle screen based on the combination of the display instruction command saved in the RAM 64. The process management unit 35 instructs the JPEG engine 36 to expand the compressed still image data at the past time designated by the display instruction command and instructs the image conversion unit 83 to perform an inverse conversion against the expanded still image data 55. Further, it instructs the display image producing unit 32 to produce the display still image of the wide screen based on the original -size reproducing still image data 56 produced by the inverse conversion of the image conversion unit 83.

If the expanded still image data 55 expanded by the JPEG engine 36 is saved into the HDD 26, the image conversion unit 83 produces the original -size reproduced still image data 56 from the expanded still mage data 55 saved by the HDD 26 in accordance with the conversion rule data 82 saved in EEPROM 65. The image conversion unit 83 produces the original -size reproduced still image data 56 of the image which has the same pixel numbers and size of Fig.20(A) and saves it into the HDD 26. The image conversion unit 83 produces the original -size reproduced still image data 56 in which the circular image is located in the center of the image and a uniform color (black for example) is coated on the peripheral area outside of the circular image. The display image producing unit 32 obtains the original- size reproduced still image data 56 saved in the HDD 26 through the ASIC 24 and produces the display still image data of the wide angle image (the circular image).

As state above, according to the third embodiment, the image conversion unit 83 separates the image of the shot still image 84 into a plurality of blocks and produces the reduced size still image data 85 in which blocks including the circular image within a plurality of blocks are assigned. The pixel numbers of the reduced size still image data 85 are smaller than that of the shot still image data 84. Then, the JPEG engine 36 compresses the reduced size still image data 85. Accordingly, the data amount of the compressed still image data saved in the HDD 26 can be reduced.

Further, the color conversion unit 81 uniformly coats the area outside of the circular image in the shot still image data 84 with black. Accordingly, if blocks including the circular image and outside of the circular image are compressed with the JPEG method, this compression can reduce high frequencies components in a spatial frequency and extend the run length when entropy coding. Reducing high frequencies components in a spatial frequency and extending the run length when entropy coding result in reduction of the compressed data amount.

In the third embodiment, the image conversion unit 83 converts the blocks including the circular image as an arrangement without modification and produces the reduced -size still image data 85 as shown in Fig.20. Alternatively, as shown in the modification of assignment every pixel unit in the Fig. 13 of the embodiment 1, the image conversion unit 83 may rearrange the block in a way that blocks in the central area of the circular image are realigned from upper left to lower right of the image of the reduced size still image data 85 in order.

Further, alternatively, the image conversion unit 83 may produce the reduced size still image data 85 of which image configuration is different from the outline of the plurality of blocks including the circle image. In this modification, the image conversion unit 83 may assign the plurality of blocks including the circle image to the image of the reduced size still image data 85 in order for example.

Further, the image conversion unit 83 may produce the reduced size still image data 85 of which block numbers are larger than that of the plurality of blocks including the circular image. In this case, the image conversion unit 83 makes excess blocks not assigned as blocks including the circular image be blocks of the image composed of a uniform color such as black. Accordingly, the data amount of the excess blocks can be limited to the minimum, avoiding losing data amount reduction effect.

Further, the image conversion unit 83 may use a plurality of blocks which have different numbers of pixels as the plurality of blocks including the circular image.

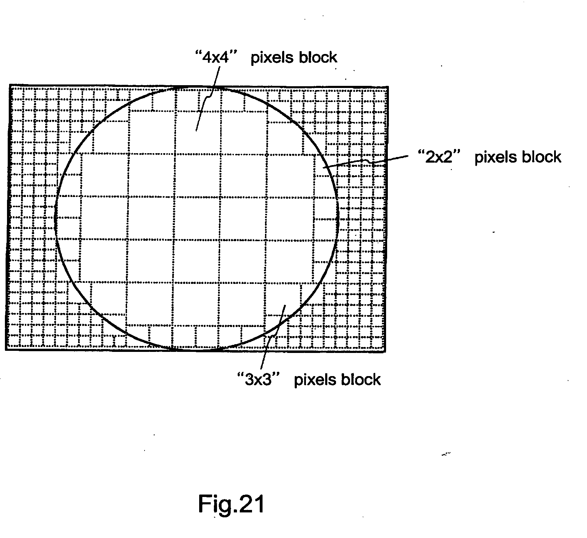

Figs. 21 is an illustrative diagram showing a case example in which a plurality of blocks including a circular image are clipped from the shot still image 84 based on the plurality of blocks which have different numbers of pixels each other. In the example of the Fig.21, the central area of the circular image is clipped every a block including "4x4" pixels and the circumferential area of the circular image is clipped every a block including "2x2"pixels and the area in-between them is clipped every a block including "3x3"pixels.

Regarding the circular image shot by the fish eye lens 9, the circumferential area of the image is largely deformed as shown in the optics using the fish eye lens 9 of Fig.3. On the other hand, in the central area of the circular image, there is almost no deformation of the image. Further, in view of image angles, the substantial resolution in the central portion of the circular image is higher than that of the circumferential area of the image. Hence, as shown in Fig.21, the image in the circumferential area of the circular image is clipped every block unit including small numbers of pixels compared to the central area. This configuration can avoid the reduction of the amount of information about the circumferential area of the image which has large deformation and the low resolution, and further reduce the total amount of information as the whole image. Accordingly, it is possible to restrain lowering image quality of the image clipped and produced from a part of the circular image and reduce the data amount of the accumulated still image data.

Each of embodiments stated above of the invention is preferable example of the invention, but the invention is not limited to it and may include various modifications and changes within the spirit of the invention.

In the above embodiments, the ultra-small wide-angle camera device 1 comprises the HDD 26 for saving the still image data (the accumulated video data 54) compressed by the JPEG method , the JPEG engine 36 for expanding the compressed still image data, image conversion units 34,73, 83 for producing the original-size reproduced still image data 56 from the expanded still image data and the displayed image producing unit 32 for producing the displayed still image from the original-size reproduced still image data 56. But, all of these constituents or a part of them may be installed in the personal computer 12.

If all of these constituents are installed in the personal computer 12 for example, the device communication unit 38 in the ultra-small wide-angle camera device 1 may send the still image data compressed by the JPEG engine 36 to the host communication unit 46 in the personal computer 12 thorough the USB cable 11. In such case, data amount of the image to be sent can be reduced compared to the case when the device communication unit 38 in the ultra-small wide-angle camera device 1 sends the shot still image data 52 itself which is not compressed by the JPEG engine 36 to the host communication unit 46 in the personal computer 12.

In the above embodiments, the ultra-small wide-angle camera device 1 and the personal computer 12 send and receive communication data each other through the device communication unit 38 as a transmission unit, USB cable 11 and the host communication unit 46. Alternately, the ultra-small wide-angle camera device 1 and the personal computer 12 may be coupled together through a communication cable based on the Institute of Electrical and Electronic Engineers (IEEE) 802.3 standard or a wireless communication such as IEEE802.11 standard. Further, the ultra-small wide-angle camera device 1 and the personal computer 12 need not communicate mutually directly. The ultra-small wide-angle camera device 1 and the personal computer 12 may be coupled together through a network such as Local Area Network (LAN) or Internet and send and receive predetermined communication data each other through a communication repeater such as a hub device and a router device and a server device on the net work.

In the above embodiments, the single ultra-small wide-angle camera device 1 and the single personal computer 12 are coupled together through the USB cable 11. Alternatively, the single ultra-small wide-angle camera device 1 and a plurality of personal computers 12 may be coupled together through a net work, or a plurality of ultra-small wide-angle camera devices 1 and the single personal computers 12 may be coupled together, or a plurality of ultra-small wide-angle camera devices 1 and a plurality of personal computers 12 may be coupled together. In these modifications, each of the personal computers 12 specifies one of the ultra-small wide -angle camera devices 1 as a monitoring device by using identification information on the net work such as an IP address and may send a display instruction command to it. Further, each of the ultra-small wide-angle camera devices 1 may send the displayed image data added with identification information for one of the personal computers 12 as a receiver.

In the above embodiments, a wide angle image shot by the ultra-small wide-angle camera device 1 is saved in the HDD 26 and supplied to the personal computer 12. Alternatively, a wide angle image shot by the ultra-small wide-angle camera device 1 may be saved in a memory device in a server device couple to a net work such as Internet or LAN and the saved wide angle image or the clipped image from a part of it may be sent to the personal computer 12 connected the net work for the server device.

In these modifications, as above embodiments, pixel numbers of an wide angle image is reduced, efficiently reducing compressed image data, reducing saved region in the HDD 26 for saving the image data and reducing a communication road of the net work for communication.

Further, a parameter regarding image deformation due to the fish eye lens 9 may be saved together with the image data into a memory device of a server device coupled to net work or the HDD 26 of the ultra-small wide-angle camera device 1 and the server device may send the parameter together with image data to the personal computer 12. The displayed image producing unit installed in the personal computer 12 may produce a displayed image after correcting the deformed image based on the a part of the received image data by using the received parameter and the LCD 43 of the personal computer 12 may display the displayed image.

The personal computer couple to net work and the like may execute a browsing software program particularly for browsing the image including the circular image shot by the ultra-small wide-angle camera device 1 in order to browse it. Further, everyone can freely browse the partial image which is clipped from the circular image shot by the ultra-small wide-angle camera device 1 while a specific browsing software executed by the personal computer is freely provided. This browsing can be performed by saving the image including the circular image shot by the ultra-small wide-angle camera device 1 as a free sample into a server device which can be accessible via net work and holding the image which can be downloaded. For example, if a person considers buying the ultra-small wide-angle camera device 1, he/she makes his /her computer to execute the browsing software program to be freely distributed before buying and browses a sample on a net work, confirming that the clipped image has a sufficiently high quality. Namely, it is expected to promote selling the ultra-small wide-angle camera device 1.

### [Industrial Applicability]

The present invention can be widely applied to a security system in a home, various kinds of monitoring, a remote monitoring system for a pet such as a dog or a sightseeing area, a TV telephone system, a TV conference system, a system to couple a space separated from other space with other space, a personal video broadcasting system, and a recording system for human's or automobile's behavior.

## Claims

1. A method of compressing image data shot by a wide -angle lens comprising:
assigning a plurality of pixel data within a predetermined circular range based on a rectangular shot image including a circular image shot with a wide -angle lens, and producing a rectangular reduced image of which numbers of pixels are smaller than that of the rectangular shot image, and
compressing the rectangular reduced image.

2. A compressing device that compresses image data shot by a wide -angle lens comprising:
a conversion unit that assigns a plurality of pixel data within a predetermined circular range based on a rectangular shot image including a circular image shot with a wide -angle lens, and produces a rectangular reduced image of which numbers of pixels are smaller than that of the rectangular shot image, and
a compressing unit that compresses the rectangular reduced image.

3. The compressing device that compresses image data shot by a wide -angle lens according to claim 2, wherein the conversion unit assigns a plurality of pixel data within the predetermined circular range of the shot image to a rectangular reduced image, every pixel unit or every block unit including a plurality of pixels.

4. The compressing device that compresses pixel data shot by a wide -angle lens according to claim 2, wherein the conversion unit assigns a plurality of pixel data within the predetermined circular range of the shot image to a rectangular reduced image every a plurality of block units which have different pixel numbers each other so that the pixel numbers in the block of the central area of the circular range are larger than the numbers of pixels in the block of the circumferential area of the circular range.

5. The compressing device that compresses image data shot by a wide -angle lens according to claim 2, wherein the conversion unit makes pixel data, which has been not assigned to the pixel data in the shot image data, be a predetermined uniform color in the rectangular reduced image, and the compression unit separates the reduced image into a constant (DC) component and an oscillatory (AC) component by block coding and code these components or code these components by run length coding based on a pixel alignment.

6. A wide angle camera device comprising:
a wide -angle lens;
an imaging unit that forms a circular image based on light concentrated by the wide -angle lens and images an rectangular image including the circular image;
an conversion unit that assigns a plurality of pixel data within a predetermined circular range based on the rectangular shot image including the circular image shot by the imaging unit, and produces a rectangular reduced image of which numbers of pixels are smaller than that of the rectangular shot image; and
a compressing unit that compresses the rectangular reduced image.

7. A wide angle camera device comprising:
a wide -angle lens;
an imaging unit that forms a circular image based on light concentrated by the wide -angle lens, assigns a plurality of pixel data within a predetermined circular range based on a rectangular shot image including the circular image , and produces a rectangular reduced image of which pixels numbers are smaller than that of the rectangular shot image; and
a compressing unit that compresses the rectangular reduced image;

8. The wide angle camera device according to claim 6 or 7, wherein the imaging unit includes at least three million pixels and more, the wide angle camera device further comprising:
a saving unit that saves the image data compressed by the compressed unit;
an expanding unit that expands the compressed image saved by the saving unit; and
a display image producing unit that clips a part of the image expanded by the expanding unit and expands the clipped part to at least the VGA size or more for producing a clipped image.

9. A monitor system comprising a wide angle camera device and a monitor device, wherein the wide angle camera device includes:
a wide -angle lens;
an imaging unit that forms a circular image based on light concentrated by the wide -angle lens, assigns a plurality of pixel data within a predetermined circular range based on a rectangular shot image including the circular image , and produces a rectangular reduced image of which pixels numbers are smaller than that of the rectangular shot image; and the imaging unit having at least three million pixels or more;
a compressing unit that compresses the rectangular reduced image produced by the imaging unit;
a saving unit that saves the image data compressed by the compressing unit; an expanding unit that expands the compressed image saved by the saving unit; and
a display image producing unit that clips a part of the image expanded by the expanding unit and expands the clipped part to at least the VGA size or more for producing a clipped image, wherein
the browsing unit includes a displaying unit that receives the clipped image which is expanded or the clipped image before the clipped image is expanded by communication from the wide angle camera device and displays the received image to be displayed.

10. An monitor system having a wide -angle lens; a wide -angle lens camera device that generates a rectangular shot image including a circular image shot by the wide -angle lens: and a browsing unit that includes a display unit displaying the rectangular shot image generated by the wide -angle lens camera device or a part of the rectangular shot image, the monitor system comprising:
an conversion unit that assigns a plurality of pixel data within a predetermined circular range based on the rectangular shot image including the circular image shot by the imaging unit, and produces a rectangular reduced image of which numbers of pixels are smaller than that of the rectangular shot image, and
a compressing unit that compresses the rectangular reduced image;
a transmission unit that transmits the image compressed by a compressing unit and/or saved by a saving unit from the wide -angle lens camera device to the browsing unit
an expanding unit that expands the image compressed image saved by the saving unit or the compressed image transmitted by the transmitting unit; and
a displaying image producing unit that clips a part of the image expanded by the expanding unit or an expanded or shrunk and expands the clipped part for producing a clipped image to be displayed by a displaying unit.
